# EUROPEAN PATENT APPLICATION

(11) **EP 4 546 826 A1**
(43) Date of publication of application: **30.04.2025**
(21) Application number: 23827530.9
(22) Date of filing: 22.06.2023
(51) Int. Cl.: H04W 4/40, H04W 4/06, G08G 1/00, G08G 1/0967, H04B 1/3822, H04W 56/00, G01S 19/13, H04W 72/20, H04W 72/04, H04W 72/51

(54) **V2X COMMUNICATION MODULE**

(30) Priority: 22.06.2022 KR 20220076472; 22.06.2022 KR 20220076474; 22.06.2022 KR 20220076476
(71) Applicant: LG INNOTEK CO. LTD, Gangseo-gu Seoul 07796 (KR)
(72) Inventor: LEE, Jung Yub, Seoul 07796 (KR); JO, Sang Uk, Seoul 07796 (KR)
(74) Representative: M. Zardi & Co S.A.
(86) International application number: PCT/KR2023/008644
(87) International publication number: WO 2023/249420

(57) **Abstract**

A communication module according to a first embodiment of the present invention comprises: a communication unit that receives communication channel configuration information for performing V2X communication from a base station; and a processing unit that allocates a bandwidth for each function for performing V2X communication according to the received communication channel configuration information and generates communication data, wherein the communication channel configuration information varies according to the area in which the communication module is located.

## Description

### [Technical Field]

The present invention relates to a communication module, and more specifically, to a communication module for autonomous driving and intelligent transportation systems, a base station, and an autonomous driving and intelligent transportation system.

### [Background Art]

In order to commercialize autonomous driving and intelligent transportation systems, V2X functions that enable communication between vehicles and objects are required. V2X communication refers to communication that provides information through wired and wireless networks centered on vehicles; and wireless communication between vehicles (V2V: Vehicle to Vehicle), wireless communication between vehicles and infrastructure (V2I: Vehicle to Infrastructure), in-vehicle networking (IVN: In-Vehicle Networking), vehicle to mobile terminal communication (V2P: Vehicle to Pedestrian), and the like are collectively referred to as V2X. V2X can be used to enhance the information environment, stability, and convenience of vehicles and roads.

There may be various types of applications utilizing V2X, and efficient use of limited frequency resources may be a problem. If the environment where traffic for a specific application is concentrated is not taken into consideration, problems may arise with the quality of the application itself.

In addition, V2X communication uses GNSS to perform time synchronization for communication, but since GNSS communication is difficult in GNSS shadow areas such as tunnels, a technology that can perform synchronization between communication modules is required.

In addition, when vehicles driving on different roads merge, such as at an intersection, there is a risk of accidents occurring unless V2V communication between them is smooth and driving cooperation is well performed.

### [Detailed Description of the Invention]

### [Technical Subject]

The technical problem to be solved by the present invention is to provide a communication module, a base station, and an autonomous driving and intelligent transportation system dynamically allocating V2X frequency bandwidth for autonomous driving and intelligent transportation systems.

Another technical problem to be solved by the present invention is an invention relating to a communication module capable of V2X communication in a GNSS shadow area and a communication method of the communication module.

Yet another technical problem to be solved by the present invention is to provide a communication module, a base station, and an autonomous driving and intelligent transportation system that perform driving cooperation.

### [Technical Solution]

In order to solve the above technical problem, a communication module according to a first embodiment of the present invention comprises: a communication unit that receives communication channel configuration information for performing V2X communication from a base station; and a processing unit that allocates a bandwidth for each function for performing V2X communication according to the received communication channel configuration information and generates communication data, wherein the communication channel configuration information varies according to the area in which the communication module is located.

In addition, the communication channel configuration information is set according to regional information within the coverage area of the base station, but may vary according to changes in circumstances within the coverage area of the base station.

In addition, the communication channel configuration information may have a different bandwidth for the autonomous driving function depending on at least one among pedestrian information, traffic information, and vehicle density within the coverage area of the base station.

In addition, the communication channel configuration information may be transmitted periodically from the base station.

In addition, the communication channel configuration information is transmitted in a first period, but when the communication channel configuration information is changed, the transmission period of the communication channel configuration information can be transmitted in a second period that is faster than the first period for a predetermined time.

In order to solve the above technical problem, a base station according to a first embodiment of the present invention includes a processing unit that sets communication channel configuration information for performing V2X communication using regional information within a coverage area; and a communication unit that transmits the communication channel configuration information set as above to the coverage area.

In addition, the processing unit may change the communication channel configuration information according to changes in circumstances within the coverage area.

Additionally, the processing unit may set the communication channel configuration information to allocate a bandwidth for the autonomous driving function according to at least one among pedestrian information, traffic information, and vehicle density within the coverage area.

In addition, the communication unit receives module information from one or more communication modules located within the coverage area, and the processing unit may set the communication channel configuration information using the module information received as above.

In addition, the communication unit may transmit the communication channel configuration information in a first period.

In addition, when the processing unit changes the communication channel configuration information, the communication unit can transmit the communication channel configuration information changed as above in a second period that is faster than the first period for a predetermined time.

In order to solve the above technical problem, an autonomous driving and intelligent transportation system according to a first embodiment of the present invention includes: a base station that sets communication channel configuration information for performing V2X communication using regional information within a coverage area and transmits the set communication channel configuration information to the coverage area; and a communication module that receives the communication channel configuration information when located within the coverage of the base station and allocates bandwidth for each function for performing V2X communication according to the communication channel configuration information received as above to perform V2X communication.

In addition, the base station may set the communication channel configuration information to allocate bandwidth for the autonomous driving function based on at least one among pedestrian information, traffic information, and vehicle density within the coverage area.

In order to solve the above technical problem, the communication method of the communication module according to the second embodiment of the present invention, in a communication method of the communication module in a GNSS shadow area, includes steps of: storing the latest time point at which GNSS communication is performed based on an internal timer as a shadow area entry time point when entering a GNSS shadow area, and broadcasting the shadow area entry time point; and performing synchronization using the most recent shadow area entry time point among a shadow area entry time point of the other communication module as received and the shadow area entry time point as stored when receiving a shadow area entry time point from another communication module.

In addition, it may include a step of setting the communication module having the most recent shadow area entry time point as a synchronization reference communication module.

In addition, it may include forming a first group with communication modules that performed the synchronization, and performing communication with other communication modules within the first group.

In addition, when receiving a shadow area entry time point from another communication module that does not belong to the first group, it may include a step of performing synchronization using the most recent shadow area entry time point among the shadow area entry time points of the other communication module that does not belong to the first group and the shadow area entry time points of the first group.

In addition, the shadow area entry time point as stored can be periodically broadcast.

In addition, if the most recent shadow area entry time point is changed, a step of saving the most recent shadow area entry time point as its own shadow area entry time point may be included.

In addition, before receiving the shadow area entry time point from the other communication module, it may include steps of: calculating the minimum and maximum values of the time uncertainty between the GNSS communication and the internal timer, and performing temporary synchronization with the other communication module based on a reference signal within the range of the minimum and maximum values of the time uncertainty; and receiving the shadow area entry time point from the other communication module through the temporary synchronization.

In order to solve the above technical problem, a communication module according to a second embodiment of the present invention includes: a processing unit that stores the latest time point at which GNSS communication is performed based on an internal timer when entering a GNSS shadow area as a shadow area entry time point; and a communication unit that broadcasts the shadow area entry time point, wherein the processing unit performs synchronization using the most recent shadow area entry time point among the shadow area entry time point of the other communication module as received and the shadow area entry time point as stored when the processing unit receives a shadow area entry time point from another communication module.

In addition, the processing unit forms a first group with the communication modules that performed the synchronization, and when the communication unit receives a shadow area entry time point from another communication module that does not belong to the first group, may perform synchronization using the most recent shadow area entry time point among the shadow area entry time points of the other communication module that does not belong to the first group and the shadow area entry time points of the first group.

In addition, the communication unit may periodically broadcast the stored shadow area entry time point.

In addition, the processing unit may store the most recent shadow area entry time point as its own shadow area entry time point when the most recent shadow area entry time point is changed.

In addition, before receiving the shadow area entry time point from the other communication module, the minimum and maximum values of the time uncertainty between the GNSS communication and the internal timer are calculated, temporary synchronization is performed with the other communication module based on a reference signal within the range of the minimum and maximum values of the time uncertainty, and the shadow area entry time point may be received from the other communication module through the temporary synchronization.

In order to solve the above technical problem, a communication module according to a third embodiment of the present invention includes: a communication unit that transmits and receives a driving negotiation message with a base station or another communication module when entering a driving negotiation required area; and a processing unit that determines a driving scenario within the driving negotiation required area using a driving negotiation message being received from the base station when the base station is located in the driving negotiation required area, wherein the base station is searched through broadcast communication and the driving negotiation message is received through unicast communication.

In addition, the communication unit may transmit a search message including information on entering a driving negotiation required area when searching for the base station, and receive a response message including unicast link setup information from the base station.

In addition, the unicast link configuration information may include at least one among a location of a sub-channel, the number of sub-channels, transmission (Tx) power, and a valid time for a radio resource.

In addition, the processing unit may connect a unicast link using a sub-channel with the lowest reception signal strength among the sub-channels included in the response message.

In addition, the processing unit may release the unicast link connection after receiving the driving negotiation message.

In addition, the communication unit receives, from the base station through unicast communication, whether another communication module is located within the driving negotiation required area, and the driving negotiation message including driving information of the other communication module when another communication module is located within the driving negotiation required area, or a driving assistance message according to the other communication module within the driving negotiation required area, in which the driving assistance message may include at least one of an entry order, a driving route, a driving speed, and an expected location of another vehicle at the time of driving.

In addition, the base station may receive a driving information message including a driving route and a driving speed from another communication module within the driving negotiation required area through broadcast communication, perform paging with another communication module within the driving negotiation required area through groupcast communication, and transmit the driving assistance message to another communication module within the driving negotiation required area through unicast communication.

In addition, when a vehicle not equipped with a communication module is located within the driving negotiation required area, the base station can detect driving information of the vehicle not equipped with the communication module and generate the driving negotiation message or the driving assistance message using the detected driving information.

In addition, the communication module is a communication module being mounted on a vehicle, and the above driving negotiation required area may be a merging area where multiple roads join.

In addition, the base station may include at least one of a base station (RSU) and a mobile communication base station (NB).

In addition, the communication unit transmits an overtake message to the other communication module through broadcast communication when accessing the other communication module, transmits and receives a driving negotiation message with the other communication module through unicast communication, and transmits a second driving negotiation message after transmitting a first driving negotiation message to the other communication module, wherein the first driving negotiation message can be retransmitted when receiving a NACK signal for the first driving negotiation message.

In addition, the communication unit transmits an overtaking request message to the other communication module, and receives an overtaking consent message or an overtaking rejection message from the other communication module, wherein the overtaking consent message may include front camera information of the other communication module.

In order to solve the above technical problem, a communication module according to another embodiment of a third embodiment of the present invention includes: a communication unit that transmits and receives a driving negotiation message with a base station when entering a driving negotiation required area; and a processing unit that determines a driving scenario within the driving negotiation required area using the driving negotiation message received from the base station, wherein information on the driving negotiation required area is received from the base station using broadcast communication, and wherein a driving negotiation message or a driving assistance message is received through groupcast communication for a communication module being located within the driving negotiation required area.

In addition, the driving negotiation required area is a roundabout, and the driving assistance message may include at least one of an entry time point into the roundabout and a driving priority.

In addition, the driving negotiation required area is an intersection, and the groupcast being performed varies depending on the type of driving lane within the driving negotiation required area, and the communication unit can receive the driving negotiation message through groupcast communication corresponding to the groupcast to which the communication module belongs.

In order to solve the above technical problem, an autonomous driving and intelligent transportation system according to a third embodiment of the present invention includes: a base station located in a driving negotiation required area, receiving a search message or a driving information message from a communication module within the driving negotiation required area, and transmitting a driving negotiation message to a communication module requiring driving negotiation when a driving negotiation is required between communication modules within the driving negotiation required area; and a communication module determining a driving scenario within the driving negotiation required area using the driving negotiation message received from the base station when entering the driving negotiation required area, wherein the search message or the driving information message is transmitted and received by broadcast communication, and wherein the driving negotiation message is transmitted and received by unicast communication.

### [Advantageous Effects]

According to embodiments of the present invention, in autonomous driving utilizing V2X, the efficiency of frequency resource usage can be improved compared to when frequency resources are used in a fixed form. By considering regional characteristics, more bandwidth can be allocated to important applications to improve service quality. Dynamic frequency resource utilization is possible by utilizing only a very small portion of bandwidth and base stations among V2X without using separate hardware or communication technology. Also, in addition to dynamic frequency allocation according to geographical characteristics, dynamic frequency allocation is possible by considering regional characteristics over time.

In addition, according to embodiments of the present invention, V2V communication is possible even in GNSS shadow areas, and stable communication between surrounding vehicles is possible even when the GNSS shadow duration is long. In addition, if the error of the internal timer is small, communication is possible without time sync operation between groups, and if a large error occurs, temporary time synchronization is possible by predicting the time synchronization section through the time uncertainty variable and the reference signal, and time synchronization between groups is possible with data received thereafter.

In addition, according to embodiments of the present invention, in autonomous driving utilizing V2X, geographical constraints of communication can be overcome through a base station during driving negotiation. In addition, smooth traffic control is possible through linkage with the Intelligent Transport Systems (C-ITS), and the base station can act as a mediator during driving negotiation. Furthermore, in the case of conventional LTE-V2X-based communication, only broadcast is possible, so it is impossible to know whether a communication packet has been received, but during driving negotiation, the intention of the receiving vehicle can be confirmed by utilizing unicast or groupcast, and the efficiency of communication can be increased and interference can be minimized by utilizing unicast and groupcast rather than simple broadcast.

### [Brief Description of Drawings]

FIG. 1 is a block diagram of a communication module and a base station according to a first embodiment of the present invention.
FIGS. 2 to 11 are diagrams for explaining a process of dynamically allocating V2X frequency bandwidth for autonomous driving and intelligent transportation systems by a communication module and a base station according to a first embodiment of the present invention.
FIG. 12 is a block diagram of an autonomous driving and intelligent transportation system according to a first embodiment of the present invention.
FIG. 13 is a flowchart of a method for dynamically allocating V2X frequency bandwidth according to a first embodiment of the present invention.
FIG. 14 is a flow chart of a V2X frequency bandwidth dynamic allocation method according to a first embodiment of the present invention.
FIG. 15 is a block diagram of a communication module according to a second embodiment of the present invention.
FIGS. 16 to 19 illustrate communication situations of a communication module according to a comparative example of a second embodiment of the present invention.
FIGS. 20 to 23 are drawings for explaining a process in which a communication module according to a second embodiment of the present invention performs communication through time synchronization with another communication module.
FIG. 24 is a flow chart of a communication method of a communication module according to a second embodiment of the present invention.
FIGS. 25 to 29 are flowcharts of a communication method of a communication module according to a second embodiment of the present invention.
FIG. 30 is a block diagram of a communication module and a base station according to a third embodiment of the present invention.
FIGS. 31 to 40 are diagrams for explaining a process of dynamically allocating V2X frequency bandwidth for autonomous driving and intelligent transportation systems by a communication module and a base station according to an embodiment of the present invention.
FIG. 41 is a block diagram of an autonomous driving and intelligent transportation system according to a third embodiment of the present invention.
FIG. 42 is a flowchart of a method for dynamically allocating V2X frequency bandwidth according to a third embodiment of the present invention.
FIG. 43 is a flowchart of a method for dynamically allocating V2X frequency bandwidth according to a third embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or arranged in "on (above)" or "below (under)" of each component, "on (above)" or "below (under)" means that it includes not only the case where the two components are directly in contact with, but also the case where one or more other components are formed or arranged between the two components. In addition, when expressed as "on (above)" or "below (under)", the meaning of not only an upward direction but also a downward direction with respect to one component may be included.

A modified embodiment according to the present embodiment may include some components of each embodiment and some components of other embodiments. That is, a modified embodiment may include one embodiment of various embodiments (a first embodiment to a third embodiment), but may omit some components and include some components of the corresponding other embodiment. Or, it may be the opposite. The features, structures, effects, and the like to be described in the embodiments are included in at least one embodiment, and are not necessarily limited to one embodiment. Furthermore, the features, structures, effects, and the like exemplified in each embodiment may be combined or modified and implemented in other embodiments by a person having ordinary skill in the art to which the embodiments belong. Therefore, the contents related to such combinations and modifications should be interpreted as being included in the scope of the embodiments.

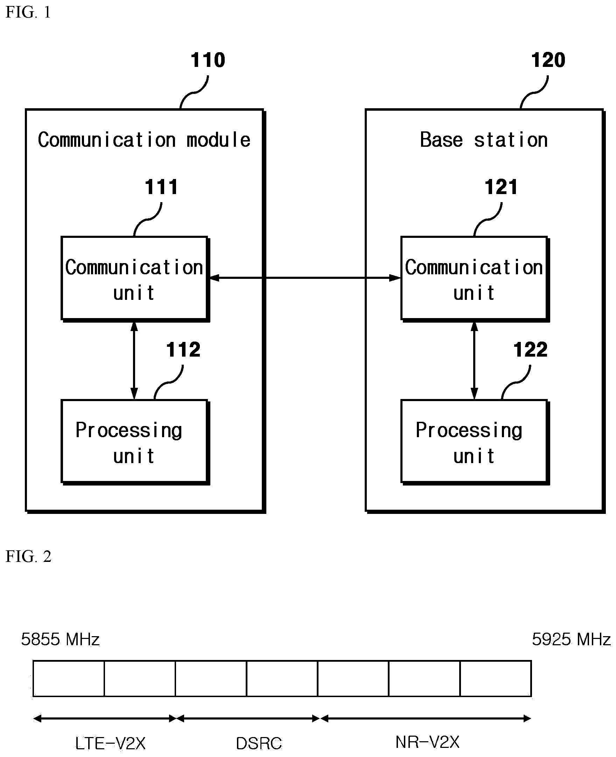

FIG. 1 is a block diagram of a communication module and a base station according to a first embodiment of the present invention.

The communication module **110** and base station **120** according to a first embodiment of the present invention transmit and receive data through V2X communication in order to implement an autonomous driving and intelligent transportation system. The communication module **110** according to a first embodiment of the present invention includes a communication unit **111** and a processing unit **112,** and the base station **120** according to a first embodiment of the present invention includes a communication unit **121** and a processing unit **122.**

The communication module **110** may be a communication module that performs V2X communication and is mounted on a mobile device such as a vehicle. The base station **120** is a base station capable of V2X communication and may be a roadside base station or a mobile communication base station (eNB) located around a road that performs communication with a vehicle with a Road Side Unit (RSU). When the communication module **110** mounted on a vehicle and the roadside base station communicates, it is V2I communication, and when the communication module **110** mounted on a vehicle and the mobile communication base station communicate, it may perform V2N communication. Hereinafter, the base station will be described with a focus on the roadside base station, but is not limited thereto.

When the communication module **110** and the base station **120** perform V2X communication, they first transmit and receive communication channel configuration information for performing V2X communication. At this time, the communication channel configuration information may be set differently for each base station **120** depending on the regional characteristics in which the base station **120** is located, and as the area in which the communication module **110** is located changes, it may vary depending on the base station **120** that covers the area in which the current communication module **110** is located.

Wireless communications such as V2X require frequency resources to be utilized. In particular, since frequency allocation must be used only for a designated purpose within a given bandwidth, efficient utilization of frequency resources is an important issue in wireless communications including V2X. FIG. 2 is an example of classifying bandwidths according to communication methods. Heterogeneous V2X technologies can simultaneously utilize different frequency bands for autonomous driving or intelligent transport systems. In the case of V2X, band 47 is used, and FIG. 2 is an example of using 70 MHz as the bandwidth for V2X. As shown in FIG. 2, LTE-V2X, Dedicated Short Range Communication (DSRC), and New Radio (NR) V2X can be utilized simultaneously using different frequency bands.

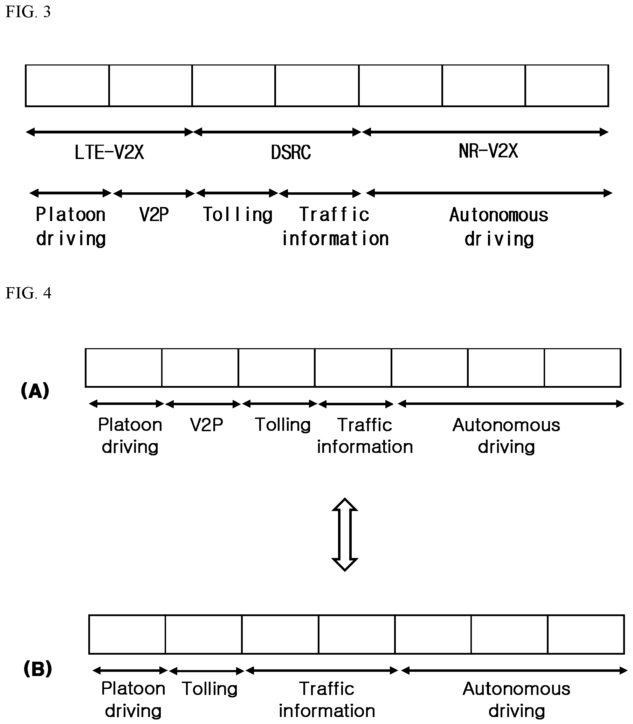

FIG. 3 is an example of additional classification according to the application that utilizes the bandwidth, in which different applications can reduce the frequency interference and increase the reliability of V2X communication by utilizing only the bandwidth allocated to each. That is, platoon driving, Vehicle to Pedestrian (V2P, an application for safety between vehicles and pedestrians), tolling (toll payment), traffic information, and autonomous driving applications can each be allocated bandwidth to implement autonomous driving and intelligent transportation systems.

The communication module **110** and the base station **120** according to a first embodiment of the present invention use a variable bandwidth in which bandwidth is dynamically allocated according to regional characteristics rather than a fixed bandwidth for each application. Since applications that are important or have a large size of data to be processed may vary depending on regional characteristics, the bandwidth configuration can be dynamically allocated differently.

For example, as shown in FIG. 4, bandwidth can be dynamically allocated differently depending on the application. (A) is a bandwidth allocation configuration on a general road, and (B) is a bandwidth allocation configuration on a highway. Since there is less need to consider pedestrians in an environment such as a highway, bandwidth for V2P can be excluded for surrounding vehicles in that area, and more bandwidth can be allocated to traffic information or autonomous driving, where the data size may become relatively large.

According to Shannon's Theorem, C = Blog2(1+S/N), where B is the bandwidth, and it can be seen that the size of the bandwidth plays a critical role in channel capacity. Therefore, improvements in the communication quality of important intelligent traffic information or autonomous driving on highways can be expected.

When trying to control parameters including bandwidth configuration of V2X terminals, the size of data required for this is not large. In the case of Narrow Band Internet of Things (NB-IOT), 180 kHz bandwidth is used to send and receive very small data, which enables low data rate but only low power and very small bandwidth usage are allowed. Therefore, in a first embodiment of the present invention, a part of the total bandwidth of V2X is allocated for a master control channel for control, and the bandwidth configuration of V2X for autonomous driving and intelligent transportation system operation can be controlled through the master control channel.

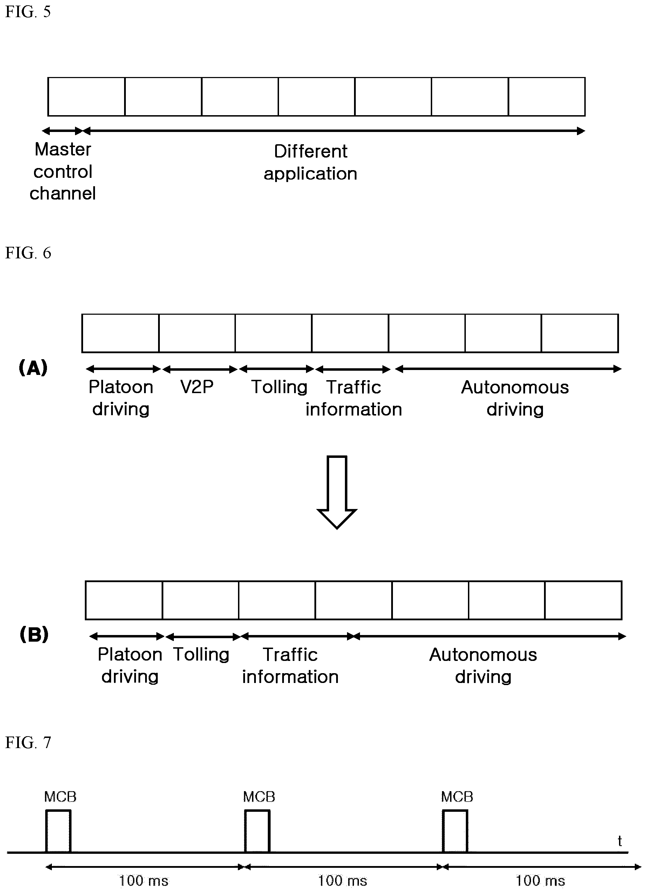

FIG. 5 is an example of allocating a master control channel from the entire bandwidth. The bandwidth of the master control channel can be variably set from 180 kHz to 1.4 MHz depending on the information to be transmitted. The master control may include the start and end locations of the bandwidth that C-V2X and DSRC should use, the start and end locations of the bandwidth that each application should use, and information on the application required in the current area. In addition, for V2X device control, technical standards such as Open Mobile Alliance Device Management DM (OMA) can be applied considering security and standard factors.

The base station **120** can allocate bandwidth according to regional characteristics within the coverage area covered by the base station **120,** set communication channel configuration information according to how the bandwidth is allocated, and transmit this to the communication module **110** located within the coverage area, thereby enabling V2X communication between the base station **120** and the communication module **110.**

The processing unit **122** of the base station **120** sets communication channel configuration information for performing V2X communication using regional information within the coverage area, and the communication unit **121** transmits the set communication channel configuration information to the coverage area.

The processing unit **122** may set the communication channel configuration information to allocate bandwidth for the autonomous driving function according to at least one among pedestrian information, traffic information, and vehicle density within the coverage area.

As previously explained, in environments such as highways, the need to consider pedestrians is reduced, so the bandwidth of V2P can be reduced or excluded, and more bandwidth can be allocated to traffic information or autonomous driving.

In addition, in the case of a central area of a city with complex roads or complex signal systems, a large bandwidth for traffic information can be allocated compared to an outer area with simple roads and simple signal systems. In addition, even if the complexity or amount of traffic information is similar, the vehicle density can be different, and if the vehicle density is high, a large bandwidth for autonomous driving can be allocated. In addition to pedestrian information, traffic information, and vehicle density, the required applications can be different depending on various regional characteristics, and the communication channel configuration information including bandwidth can be set differently depending on the importance or amount of data.

The processing unit **122** may change the communication channel configuration information according to changes in the situation within the coverage area. The communication channel configuration information is set to reflect regional characteristics, but is not fixed by setting once, and the communication channel configuration information may be changed according to changes in the situation. When road conditions or traffic systems change, or vehicle density changes depending on rush hours, weekends, and the like, the bandwidth required for each application can vary, so the communication channel configuration information may be changed according to changes in the situation within the coverage area.

As shown in Fig. 6, after platoon driving, V2P, tolling, traffic information, and autonomous driving are allocated with bandwidths as in (A), when traffic volume increases due to changes in circumstances, such as rush hour, the communication channel configuration information can be changed by greatly allocating bandwidths for traffic information and autonomous driving by excluding V2P. For example, when many autonomous driving capable vehicles enter the coverage area being managed by the base station, the bandwidth for autonomous driving may be greatly changed to 35 MHz, and the bandwidth for intelligent traffic information may be changed from 20 MHz to 15 MHz. When traffic volume is high, the decision can be made by referring to the vehicle registration information, and also the bandwidth setting can be determined by monitoring the Received Signal Strength Indicator (RSSI) for each sub-bandwidth to determine the degree of congestion.

Since the communication module **110** and the base station **120** performing V2X communication must have the same communication channel configuration information to enable communication, the communication unit **121** transmits the set communication channel configuration information to the coverage area. At this time, the communication unit **121** can transmit the communication channel configuration information to the entire coverage area through broadcasting.

The communication unit **121** may transmit communication channel configuration information to a Master Configuration Block (MCB) through the Master Control Channel. The MCB may include the activated communication method (LTE-V2X, NR-V2X, or DSRC) and application in the coverage area currently managed by the base station, the start and end of the frequency of the bandwidth of each application, and the area information to which the corresponding information is applied, the expiration time, and the like.

The communication unit **121** may transmit the communication channel configuration information in a first period. Even if the size of the data for transmitting the communication channel configuration information is small, some bandwidth is required, so the communication channel configuration information can be transmitted in a first period, which is a preset period. As shown in FIG. 7, the MCB can be transmitted within the coverage area every 100 ms.

When the processing unit **122** changes the communication channel configuration information according to a change in situation, and the like, the communication unit **121** can transmit the changed communication channel configuration information in a second period that is faster than the first period for a predetermined time. When the communication channel configuration information is changed, if the changed communication channel configuration information is transmitted in a first period, communication with the communication module **110** that was performing V2X communication using the previous communication channel configuration information for one period and driving autonomously may not be possible. Since an accident may occur during that time, when the communication channel configuration information is changed, the changed communication channel configuration information can be transmitted in a second period that is faster than a first period for a predetermined time. The time for transmitting the communication channel configuration information in a second period may be the period of a first period.

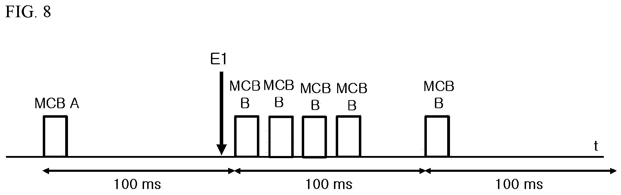

As shown in FIG. 8, when a change in situation occurs at time E1 and the communication channel configuration information is changed from MCB A to MCB B, the communication channel configuration information transmission period can be accelerated from a first period to a second period. After the changed communication channel configuration information is sufficiently transmitted within the coverage area, the communication channel configuration information can be transmitted again in a first period.

The communication module **110** may be a module for V2X communication mounted on a mobile device such as a vehicle. The location may be changed depending on the movement of the mobile device, and the base station **120** covering the area where the communication module **110** is located may be changed. As described above, the communication channel configuration information may be changed depending on regional information for each base station **120,** and in order to perform V2X communication with the corresponding base station **120,** the communication unit **111** receives the communication channel configuration information for performing V2X communication from the corresponding base station **120.** The received communication channel configuration information may be stored in a memory.

The communication channel configuration information can be received when entering the coverage area of the base station **120,** and when located within the coverage area, the communication channel configuration information can be received every first period in which the base station **120** transmits the communication channel configuration information.

The above communication channel configuration information may be set according to regional information within the coverage area of the base station **120.** Here, the communication channel configuration information may have a bandwidth for the autonomous driving function that varies according to at least one among pedestrian information, traffic information, and vehicle density within the coverage area of the base station **120.**

In addition, the communication channel configuration information may be changed according to a change in the situation within the coverage area of the base station **120.** When the communication channel configuration information is changed, the transmission period of the communication channel configuration information may be transmitted in a second period that is faster than a first period for a predetermined time, and when the communication unit **111** receives the changed communication channel configuration information, it may confirm the change in the communication channel configuration information by comparing it with the communication channel configuration information previously received and stored. When the communication channel configuration information is changed, V2X communication may be performed according to the changed communication channel information.

The processing unit **112** may generate communication data by allocating bandwidth for each function for performing V2X communication according to the communication channel configuration information received by the communication unit **111.** In order to transmit data to the base station **120** covering the area where the current communication module **110** is located, the communication unit **111** may generate communication data by allocating bandwidth for each function for performing V2X communication according to the received communication channel configuration information. In addition, in order to process data received from the base station **120,** the data included in each bandwidth can be processed according to the communication channel configuration information.

The communication channel configuration information may vary depending on the area where the communication module is located. When the communication module **110** enters the coverage area of a new base station **120** or, even within the coverage area of one base station **120,** the communication channel configuration information may be changed when the corresponding base station **120** changes the communication channel configuration information.

Accordingly, the processing unit **112** may perform V2X communication using the most recent communication channel configuration information by comparing the communication channel configuration information received by the communication unit **111** with the communication channel configuration information previously received and stored. When the communication channel configuration information received by the communication unit **111** is different from the communication channel configuration information previously stored, it may be a communication error or temporary coverage outage. Therefore, when the same communication channel configuration information is received a preset number of times or more, V2X communication can be performed using the corresponding communication channel configuration information. For example, when the same communication channel configuration information is received twice in a row, V2X communication can be performed using the corresponding communication channel configuration information.

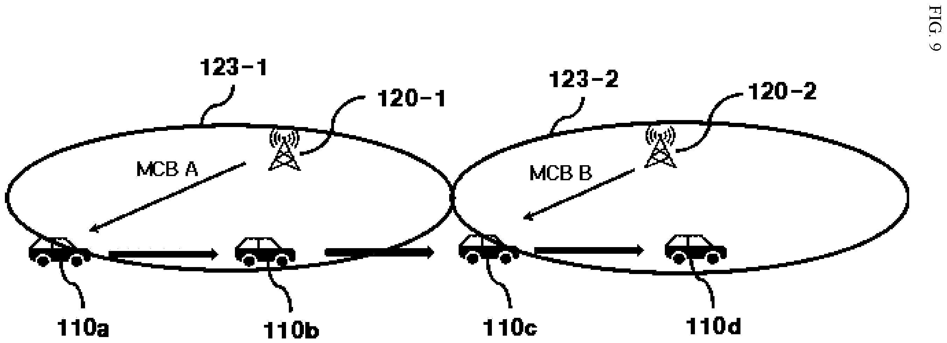

As shown in FIG. 9, when the communication module **110** moves from 110a-110b-110c-110d and enters the coverage area **123-1** of the base station **120-1,** receives communication channel configuration information (MCB A) from the base station **120-1,** and uses the corresponding communication channel configuration information (MCB A) within the coverage area **123-1** of the base station **120-1** so that it can perform V2X communication with the base station **120-1** or another communication module located in the coverage area **123-1** of the base station **120-1.** Afterwards, depending on the movement, when leaving the coverage area **123-1** of the base station **120-1** and entering the coverage area **123-2** of the base station **120-2,** the communication channel configuration information (MCB B) is received from the base station **120-2** and the communication channel configuration information is changed. Thereafter, V2X communication can be performed with the base station **120-2** or another communication module located in the coverage area **123-2** of the base station **120-2** using the corresponding communication channel configuration information (MCB B).

When entering a shadow area outside the coverage area of a base station, the last received communication channel configuration information of the base station can be maintained for operation until the communication channel configuration information of a new base station is received.

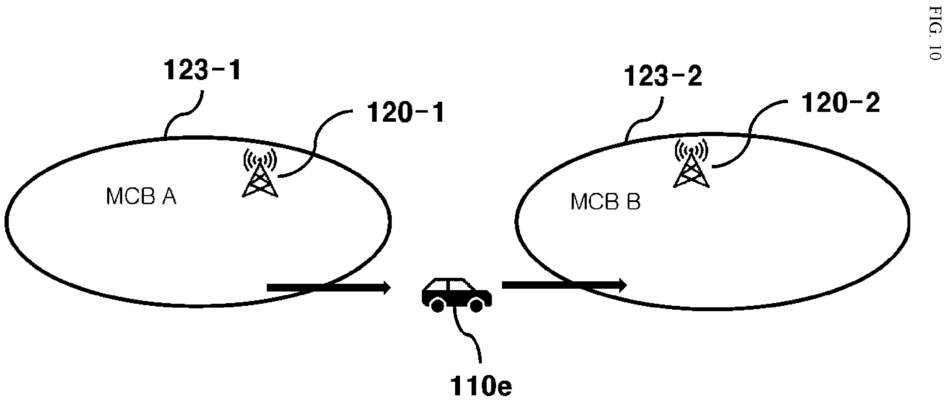

As shown in FIG. 10, after leaving the coverage area **123-1** of the base station **120-1,** before entering the coverage area **123-2** of the base station **120-2** (110e), the communication channel configuration information (MCB A) received from the base station **120-1** can be maintained for operation. Thereafter, upon entering the coverage area **123-2** of the base station **120-2,** the communication channel configuration information (MCB B) is received from the base station **120-2,** the communication channel configuration information is changed, and V2X communication can be performed with the base station **120-2** or another communication module located in the coverage area **123-2** of the base station **120-2** using the corresponding communication channel configuration information (MCB B).

In addition, when entering a shadow area outside the coverage of the base station, the communication channel configuration information may be changed to the reference communication channel configuration information for operation until new communication channel configuration information of the base station is received. At this time, when entering a shadow area outside the coverage area of the base station, when new communication channel configuration information is not received for a preset time, the communication channel configuration information may be changed to the reference communication channel configuration information (default pre-configuration) for operation after the corresponding time has elapsed. The corresponding time may be set using the expiration time included in the communication channel configuration information.

Through this, communication between different communication modules entering the shadow area can be made possible. For example, in a situation when vehicles operating with different communication channel configuration information enter a shadow area from opposite lanes, communication may become impossible or difficult depending on the different communication channel configuration information. That is, if there are vehicles A and B coming from opposite lanes, and the last communication channel configuration information of vehicle A is A and the last communication channel configuration information of vehicle B is B, communication with each other may become impossible. In this case, by changing to the standard communication channel configuration information after a certain time after entering the shadow area, communication with each other with the standard communication channel configuration information can be made possible.

The communication unit **121** of the base station **120** receives module information from one or more communication modules **110** located within the coverage area, and the processing unit **122** can set the communication channel configuration information using the received module information. The base station **120** can set the communication channel configuration information using module information from one or more communication modules **110** located within the coverage area as well as regional characteristics or situational changes. When the number of communication modules **110** within the coverage area increases, the communication channel configuration information can be set by determining whether to increase the bandwidth for the autonomous driving application using the module information of the communication module **110,** such as whether it is an autonomous driving vehicle. Or, when a communication module **110** with a high priority or requiring special processing occurs, such as an emergency vehicle entering the coverage area, the communication channel configuration information may be changed for the processing of the corresponding communication module **110.**

For example, when an emergency vehicle enters the roadway, the traffic system needs to be changed or the driving of other vehicles needs to be controlled, so the bandwidth for traffic information or autonomous driving may be temporarily greatly expanded and allocated.

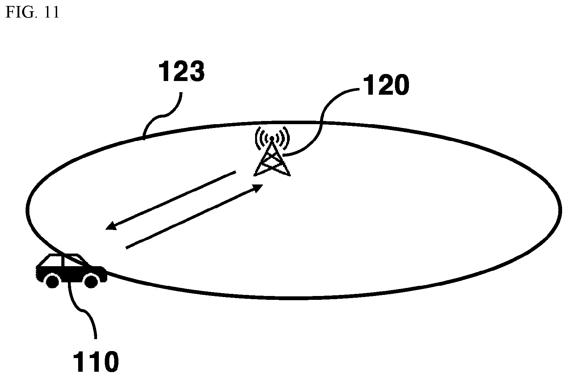

As shown in FIG. 11, the Master Control Channel is not only used for downlink purposes to broadcast the MCB of the base station **120,** but can also be utilized for purposes of transmitting basic information of the vehicle. When the communication module **110** of the vehicle enters the coverage area of the base station **120,** it can receive the MCB of the base station **120** and transmit the registration information of the vehicle to the base station **120.** The registration information can include vehicle information (size, current speed, whether it is an emergency vehicle, and the like) and whether autonomous driving is supported, whether platoon driving is in progress, whether intelligent transportation system is supported, and the like. The communication channel configuration information can be set using the corresponding As shown in FIG. 11, the Master Control Channel is not only used for downlink purposes to broadcast the MCB of the base station **120,** but can also be utilized for purposes of transmitting basic information of the vehicle. When the communication module **110** of the vehicle enters the coverage area of the base station **120,** it may receive the MCB of the base station **120** and transmit the registration information of the vehicle to the base station **120.** The registration information can include vehicle information (size, current speed, whether it is an emergency vehicle, and the like) and whether autonomous driving is supported, whether platoon driving is in progress, whether intelligent transportation system is supported, and the like. The communication channel configuration information can be set using the information,

As described above, by dynamically allocating V2X bandwidth, the efficiency of frequency resource usage can be increased and service quality can be improved compared to when frequency resources are used in a fixed form in autonomous driving. In addition, dynamic frequency resource utilization is possible by utilizing only a very small portion of the bandwidth and base station of V2X without utilizing separate hardware or communication technology. Furthermore, in addition to dynamic frequency allocation according to geographical characteristics, dynamic frequency allocation is possible by considering regional characteristics over time. For example, frequency bandwidth can be dynamically allocated according to regional characteristics instead of allocating a fixed frequency bandwidth by considering regional characteristics such as urban dense areas, highways, and suburban areas. Through this, communication reliability can be improved and delay can be prevented by setting frequency bandwidth according to the driving environment.

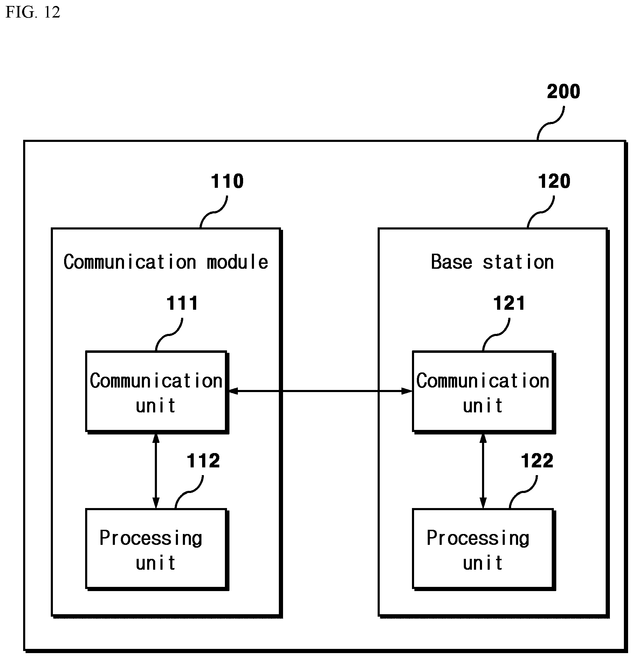

FIG. 12 is a block diagram of an autonomous driving and intelligent transportation system according to a first embodiment of the present invention. A detailed description of each component of FIG. 12 corresponds to the detailed description of the communication module and base station of FIGS. 1 to 11, and thus any redundant description will be omitted hereinafter.

An autonomous driving and intelligent transportation system **200** according to a first embodiment of the present invention sets communication channel configuration information for performing V2X communication using regional information within a coverage area, and includes a base station 120 that transmits the set communication channel configuration information to the coverage area, and a communication module **110** that receives the communication channel configuration information when located within the coverage area of the base station **120,** and allocates bandwidth for each function for performing V2X communication according to the received communication channel configuration information to perform V2X communication.

Here, the base station **120** can set the communication channel configuration information to allocate bandwidth for the autonomous driving function according to at least one among pedestrian information, traffic information, and vehicle density within the coverage area.

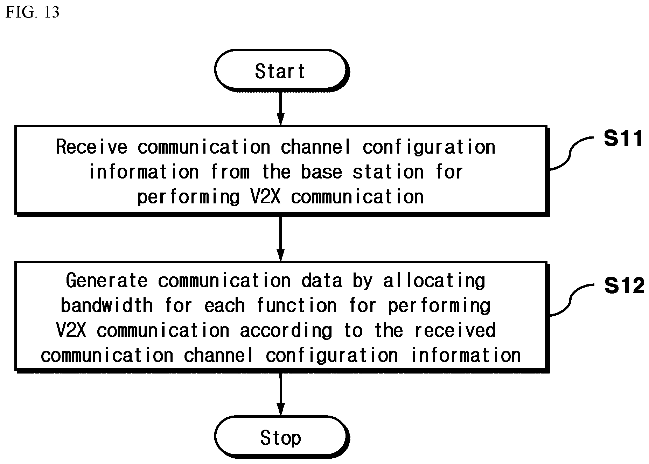

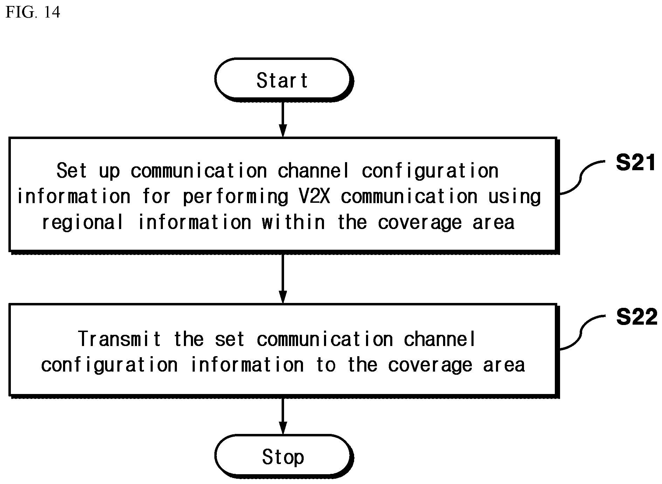

FIG. 13 is a flowchart of a method for dynamically allocating V2X frequency bandwidth according to a first embodiment of the present invention, and FIG. 14 is a flow chart of a V2X frequency bandwidth dynamic allocation method according to a first embodiment of the present invention. The detailed description of each step of FIGS. 13 and 14 corresponds to the detailed description of the communication module and base station of FIGS. 1 to 11, and thus any redundant description will be omitted hereinafter.

In order to perform V2X communication, the communication module first receives communication channel configuration information for performing V2X communication from the base station in step **S11,** and allocates bandwidth for each function for performing V2X communication according to the received communication channel configuration information in step **S12** to generate communication data. Using the generated communication data, V2X communication can be performed with the corresponding base station or another communication module within the corresponding base station coverage area.

The base station sets up communication channel configuration information for performing V2X communication using regional information within the coverage area in step **S21,** and transmits the set communication channel configuration information to the coverage area in step **S22.**

Through this, considering regional characteristics, frequency bandwidth can be dynamically allocated according to regional characteristics rather than allocating a fixed frequency bandwidth. Through this, communication reliability can be improved and delays can be prevented by setting frequency bandwidth according to the driving environment.

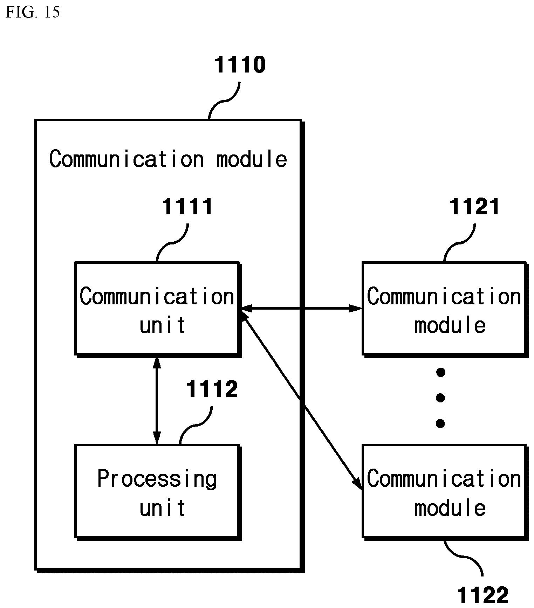

FIG. 15 is a block diagram of a communication module according to a second embodiment of the present invention.

The communication module **1110** according to a second embodiment of the present invention performs V2X communication with other communication modules **1121** and **1122.** In addition, it can perform V2X communication with not only other communication modules **1121** and **1122** but also a road side unit (RSU) to implement autonomous driving and intelligent transportation systems. The communication module **1110** according to a second embodiment of the present invention is composed of a communication unit **1111** and a processing unit **1112,** and may include a storage unit and a timer.

The communication module **1110** may be a communication module that performs V2X communication and is mounted on a mobile device such as a vehicle.

The communication module **1110** requires time synchronization to perform V2X communication with other communication modules, and in V2X communication, time synchronization is performed using the time received from a satellite using Global Satellite Navigation Systems (GNSS). However, in GNSS shadow areas where GNSS communication is difficult, such as tunnels, it is difficult to perform synchronization using GNSS.

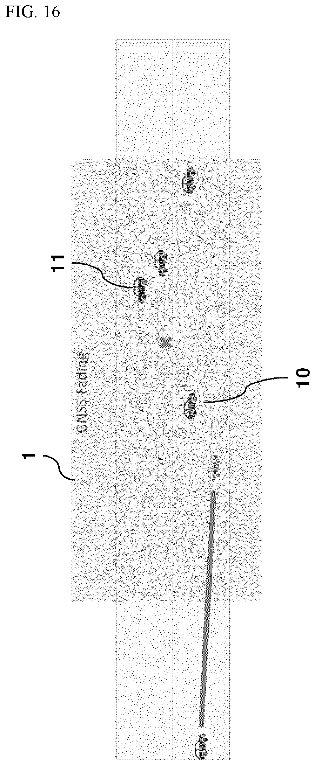

The communication distance between communication modules mounted on a vehicle is ideally about 1 km in the case where there are no other vehicles around, but is limited to about 500 m in an environment with many vehicles and obstacles. As shown in FIG. 16, it is generally difficult to synchronize time in GNSS shadow area 1 exceeding 500 m (for example, inside a tunnel, and the like).

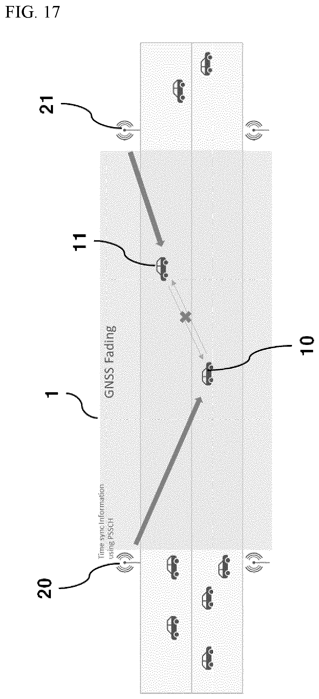

When the tunnel is short, such as about 1 km, synchronization is possible by receiving GNSS time information from roadside base stations (RSU) **20** and **21,** however, as shown in FIG. 17, in the case of a long tunnel or when there is traffic congestion or other obstacles around the tunnel entrance, the communication distance may be shortened and time information may not be transmitted properly. Accordingly, vehicles **10** and **11** inside the tunnel may not be synchronized, resulting in communication failure.

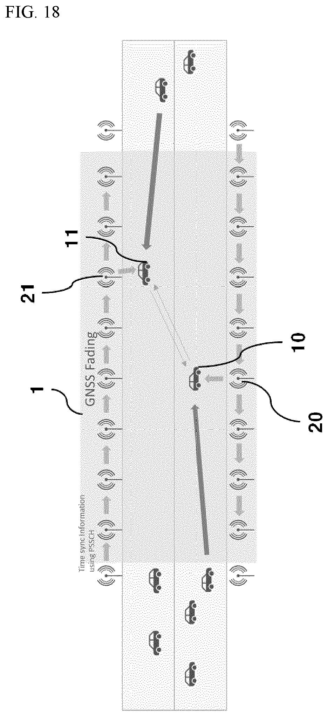

As shown in FIG. 18, when installing many roadside base stations regardless of shadow areas inside a tunnel, vehicles can communicate with each other by receiving time information from the roadside base stations **20** and **21,** however, depending on the length of the tunnel, the cost of installing the roadside base stations is incurred, and a cost issue may occur for constructing the infrastructure.

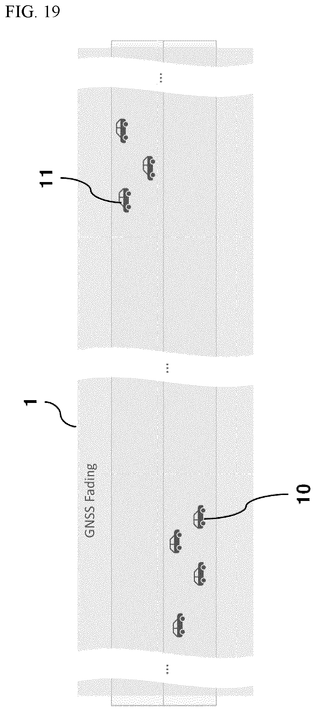

As in FIG. 19, when the length of the tunnel is considerably long, all the problems of FIGS. 16 to 18 can be applied. In Korea, there are seven tunnels longer than 5 km, and in countries with large territories such as China and the United States, there are many more tunnels longer than in Korea, so the issue of synchronization between vehicles becomes more important in V2X communications.

In order to synchronize time between communication modules in the GNSS shadow area as described above, the processing unit **1112** of the communication module **1110** according to a second embodiment of the present invention stores the latest time point of GNSS communication performed based on the internal timer as a shadow area entry time point when entering the GNSS shadow area. In order to synchronize time between communication modules, synchronization is performed through communication between communication modules without GNSS communication, and at this time, the latest time point of GNSS communication of each communication module **1110** is used. To this end, when the processing unit **1112** determines that it has been entered a GNSS shadow area, it stores the latest time point of GNSS communication performed based on the internal timer as a shadow area entry time point. Here, the shadow area entry time point means the latest reliable time at which synchronization was performed through GNSS communication. The communication module **1110** includes an internal timer, and the timer operates to calculate time even while performing GNSS communication. Internal time can be counted using an oscillator, X-TAL, resonator, and the like. By performing GNSS communication and operating a timer, the time between time synchronization periods can be calculated.

The processing unit **1112** may determine that a GNSS shadow area has been entered if it does not receive a GNSS signal for more than a period of performing GNSS communication. Or, it may determine that it has been entered a GNSS shadow area when it enters a tunnel on a map or route. When the processing unit **1112** determines that it has been entered a GNSS shadow area, it may calculate the time point at which the most recent GNSS synchronization occurred as a shadow area entry time point and store it by setting it as a UTC timestamp at that time. In order to align the reference time between communication modules, the shadow area entry time point may be stored based on coordinated universal time (UTC).

The communication unit **1111** broadcasts a shadow area entry time point in order to perform V2X communication with other communication modules **1121** and **1122.** Since synchronization is essential for communication in a GNSS shadow area, it can broadcast its own shadow area entry time point so that other communication modules **1121** and **1122** that will perform V2X communication can perform synchronization using the corresponding signal. V2X communication can be performed in a different method, such as unicast, with the communication module with which synchronization has been achieved. The communication unit **1111** can periodically broadcast the stored shadow area entry time point. The stored shadow area entry time point can be broadcast periodically so that communication with other communication modules **1121** and **1122** can be performed.

When the processing unit **1112** receives a shadow area entry time point from another communication module **1121 or 1122,** it performs synchronization using the most recent shadow area entry time point among the received shadow area entry time point of the other communication module and the stored shadow area entry time points. In order to perform communication with another communication module **1121** and **1122** located in a GNSS shadow area, synchronization must be performed by matching the stored shadow area entry time points together. At this time, in order to match the shadow area entry time points stored together into one shadow area entry time point, the most recent shadow area entry time point among the shadow area entry time points is used. Since the most recent shadow area entry time point is the most recent reliable time point, synchronization is performed based on that time point. Before receiving a shadow area entry time point from another communication modules **1121** and **1122,** the shadow area entry time point that it has stored is set as a synchronization reference, but when receiving a shadow area entry time point from another communication modules **1121** and **1122,** the shadow area entry time point that it has stored is compared with the received shadow area entry time point. If the shadow area entry time point that it has stored is more recent one than the shadow area entry time point of the other communication module **1121** and **1122,** synchronization with the other communication modules **1121** and **1122** is performed based on the shadow area entry time point that it has stored, and if the shadow area entry time point of the other communication modules **1121** and **1122** is more recent one than the shadow area entry time point that it has stored, synchronization with the other communication modules **1121** and **1122** is performed based on the most recent shadow area entry time point among the shadow area entry time points of the other communication modules **1121** and **1122.**

As the shadow area entry time point of another communication modules **1121** and **1122** is more recent one than the shadow area entry time point it has stored, and the shadow area entry time point is changed to that recent one, the processing unit **1112** stores the most recent shadow area entry time point as its own shadow area entry time point, so that it can use the synchronization reference time point for subsequent communication between communication modules.

The processing unit **1112** may form a first group with the communication modules that performed the above synchronization. Based on the most recent shadow area entry time point, synchronization is performed with other communication modules **1121** and **1122,** and a group is formed with the corresponding communication modules **1121** and **1122,** so that communication can be performed with other communication modules within the group.

During performing communication between communication modules forming a group, when the communication unit **1111** receives a shadow area entry time point from another communication module that does not belong to the first group, the processing unit **1112** can perform synchronization using the most recent shadow area entry time point among the received shadow area entry time point of the other communication module that does not belong to the first group and the shadow area entry time points of the first group. When forming a group, each communication module stores the most recent shadow area entry time point within the group, so in the case when receiving a shadow area entry time point from another communication module that does not belong to the group, the processing unit **1112** can perform synchronization using the most recent shadow area entry time point among the received shadow area entry time point of the other communication module that does not belong to the first group and the shadow area entry time points of the first group. At this time, if the shadow area entry time point of a communication module that does not belong to the group is the latest shadow area entry time point, the processing unit **1112** can update the shadow area entry time point within the group by re-synchronizing not only the communication module but also all communication modules included in the group using the corresponding shadow area entry time point.

When groups meet to perform synchronization, synchronization can be performed by comparing shadow area entry time points between representative communication modules. The communication module with the most recent shadow area entry time point can be set as a synchronization reference communication module, and the reference communication module can be set as a representative communication module of the group. When synchronization between groups is required, synchronization can be performed by comparing shadow area entry time points between the representative communication modules. Since all communication modules within a group store the same shadow area entry time point, regardless of the representative communication module, synchronization can be performed between communication modules within other groups that exchanged signals first; and a new group can be formed by sharing the most recent shadow area entry time point.

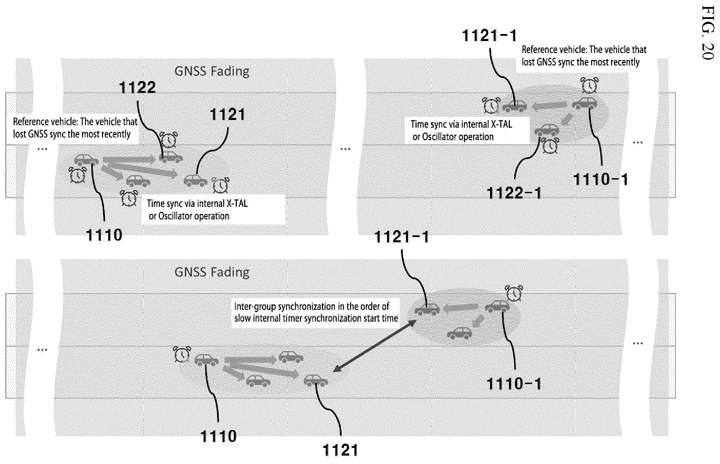

As shown in FIG. 20, the communication module **1110** enters a GNSS shadow (fading) area, transmits and receives shadow area entry time points with other communication modules **1121** and **1122,** and performs synchronization using the shadow area entry time point of the communication module **1110** that stores the most recent shadow area entry time point. The last vehicle following behind may have the most recent shadow area entry time point, but its location may vary depending on the vehicle speed, joining and leaving the group, and the like. In other words, synchronization is performed based on the currently stored shadow area entry time point. The communication modules **1110, 1121** and **1122** that performed synchronization form a group. Other communication modules **1110-1, 1121-1,** and **1122-1** that entered the GNSS shadow area in the opposite direction and synchronized also form a group. When a first group **1110, 1121** and **1122** and a second group **1110-1, 1121-1,** and **1122-1** meet in a GNSS shadow area, inter-group synchronization can be performed. At this time, inter-group synchronization can be performed in the order of slow internal timer synchronization start time. In other words, since the shadow area entry time point is likely to meet first in the order of the latest, synchronization may be performed in the order of transmitting and receiving signals that are close to each other.

As shown in FIG. 20, when a vehicle being driven enters a GNSS shadow area, V2X communication can be performed based on the internal timer. Here, the internal timer operates even in the GNSS area. When it is determined to be a GNSS shadow area, the UTC timestamp value is stored at the time of communication by synchronizing with reference to the internal timer. When synchronizing time with other vehicles, the vehicle with the latest UTC timestamp value can become the reference vehicle for time synchronization. This is because the vehicle has the most recent GNSS time information. When synchronizing time between groups, the UTC timestamps of representative vehicles are compared, and synchronization between groups is performed based on the vehicle with the most recent GNSS time information.

Before receiving the shadow area entry time point from the other communication module, the processing unit **1112** calculates the minimum and maximum values of the time uncertainty between the GNSS communication and the internal timer, performs temporary synchronization with the other communication module based on a reference signal within the range of the minimum and maximum values of the time uncertainty, and can receive the shadow area entry time point from the other communication modules through the temporary synchronization.

Temporary synchronization can be performed to receive shadow area entry time points from other communication modules. Synchronization can be performed by transmitting and receiving shadow area entry time points through temporary synchronization and sharing the latest shadow area entry time points.

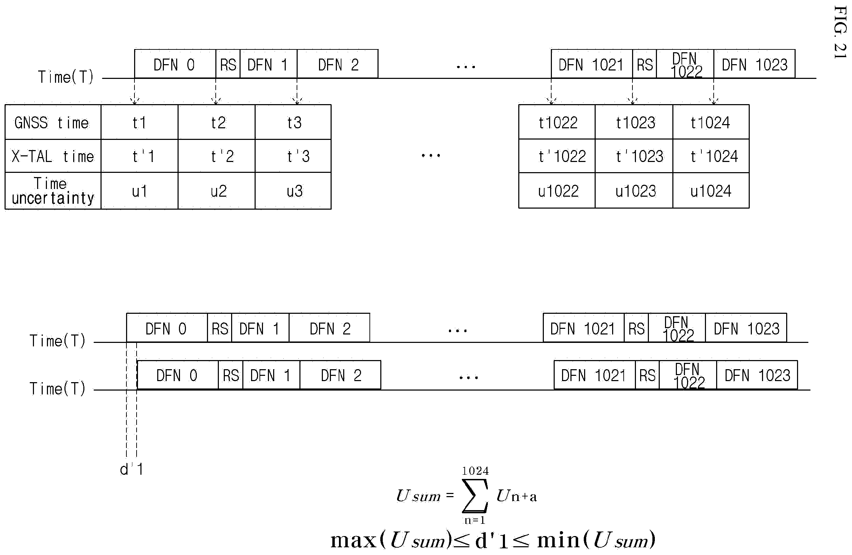

To this end, first, as shown in FIG. 21, the CV2X terminal vehicle can calculate the time uncertainty value by simultaneously operating the internal timer while synchronizing the time with GNSS. At this time, the time uncertainty value records the min and max values. Here, the minimum value (min) of the time uncertainty may be mim (Uusm), and the maximum value (max) may be max (Uusm). In addition, if the time synchronization between groups is significantly off during future synchronization between groups and communication is not possible, synchronization is performed based on the reference signal (RS) within the measured time uncertainty value range. The synchronization method can use a synchronization method using the reference signal, and data can be received by quickly temporarily synchronizing using the time uncertainty variable. After temporarily synchronizing, time and timestamp data can be received, and if the time information of the received data is the latest (compared with the time stamp), time synchronization can be performed with the corresponding data. After synchronization is performed, the timestamp data can update its timestamp value to the value of the synchronization terminal.

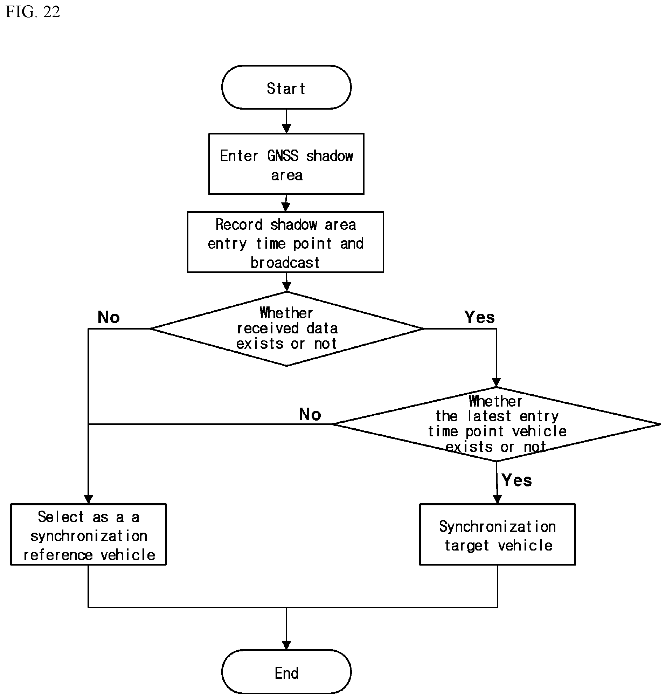

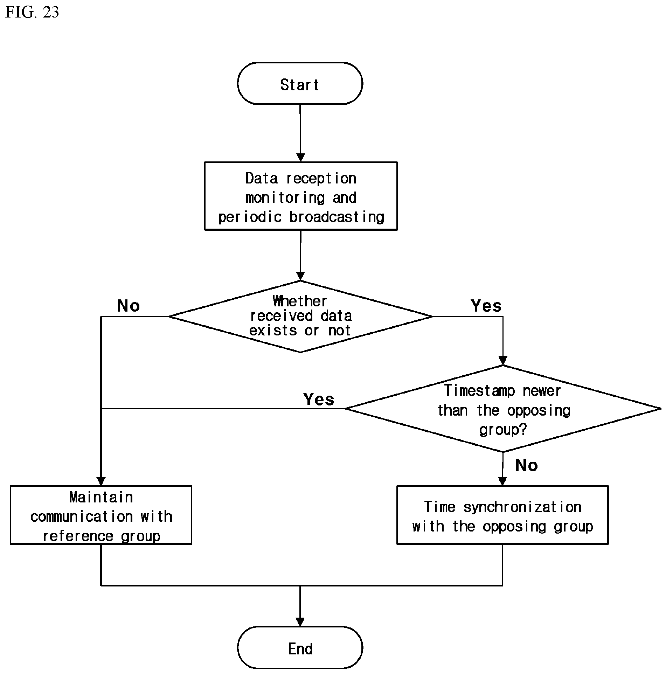

Synchronization between communication modules in a GNSS shadow area can be performed as shown in FIGS. 22 and 23. First, when entering a GNSS shadow area, the shadow area entry time point is recorded and stored and broadcasted as shown in FIG. 22. Thereafter, if there is no data being received, its own communication module can be selected as a synchronization reference communication module (vehicle). If there is data being received, the shadow area entry time point included in the corresponding data is compared with the stored shadow area entry time point. If there is no communication module (vehicle) with the latest shadow area entry time point, its own communication module is selected as a synchronization reference communication module (vehicle), and if there is a communication module (vehicle) with the latest shadow area entry time point, its own communication module is set as a synchronization target communication module (vehicle), and synchronization is performed using the latest shadow area entry time point.

Inter-group synchronization can be performed as shown in FIG. 23. After inter-group synchronization, data reception can be monitored and shadow area entry time points can be broadcast periodically. Thereafter, if no data is received, intra-group communication can be maintained with its own group as the reference group. If there is received data, the shadow area entry time point of the counterpart group included in the data is compared with the stored shadow area entry time point of the current group. If the shadow area entry time point of the current group is the latest, communication is maintained with the group to which one belongs as a reference group, and if the shadow area entry time point of the counterpart group is the latest, time synchronization is performed with the counterpart group using the shadow area entry time point of the counterpart group.

As described above, by performing synchronization using the shadow area entry time point, V2V communication is possible even in GNSS shadow areas, and stable communication between surrounding vehicles is possible even when the GNSS shadow duration is long. In addition, if the error of the internal timer is small, communication is possible without time synchronization operation between groups, and if the error is large, temporary time synchronization is possible by predicting the time synchronization section using the time uncertainty variable and the reference signal, and thereafter time synchronization between groups is possible with the data received.

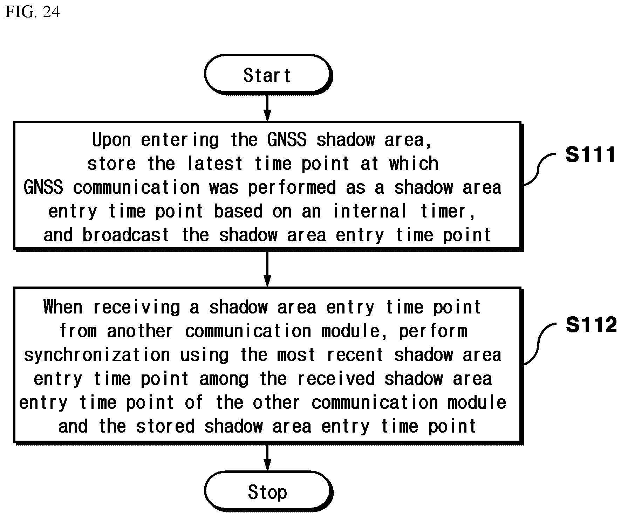

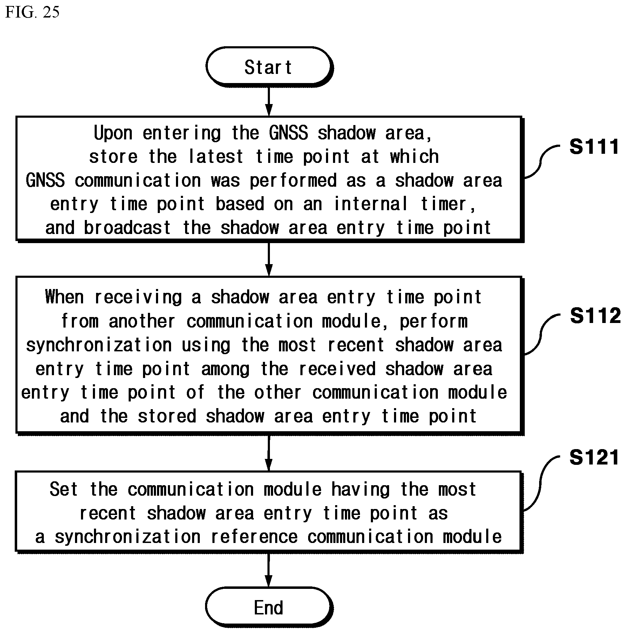

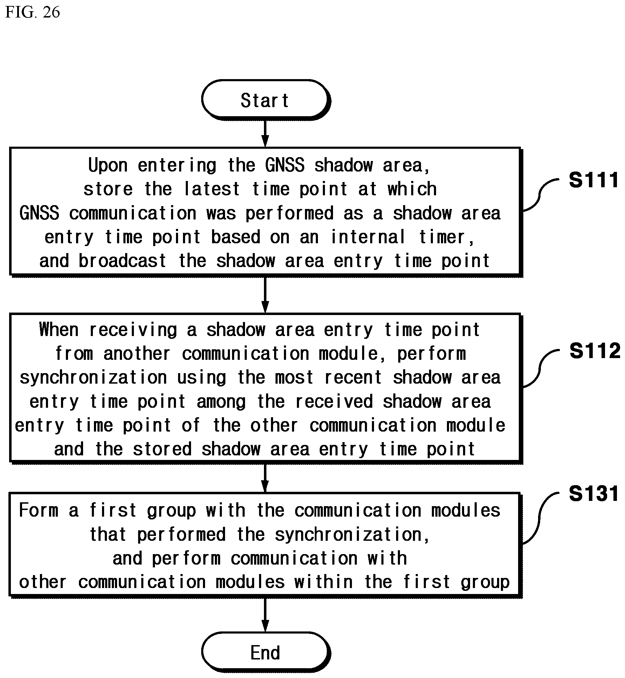

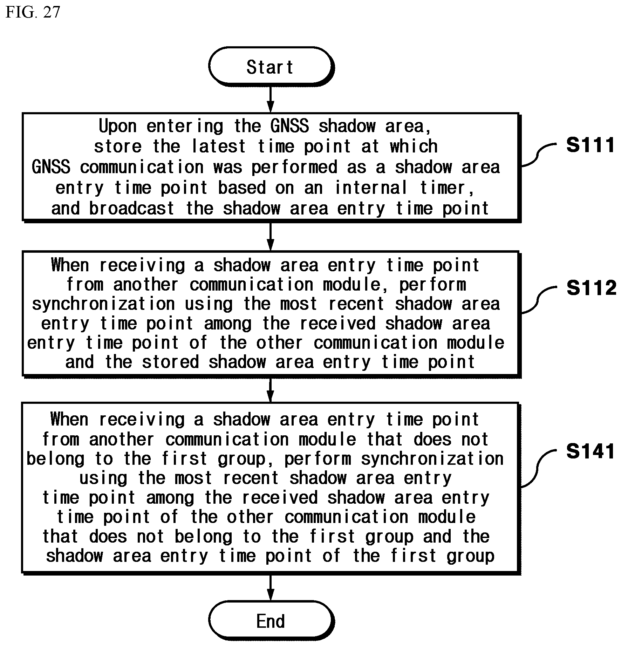

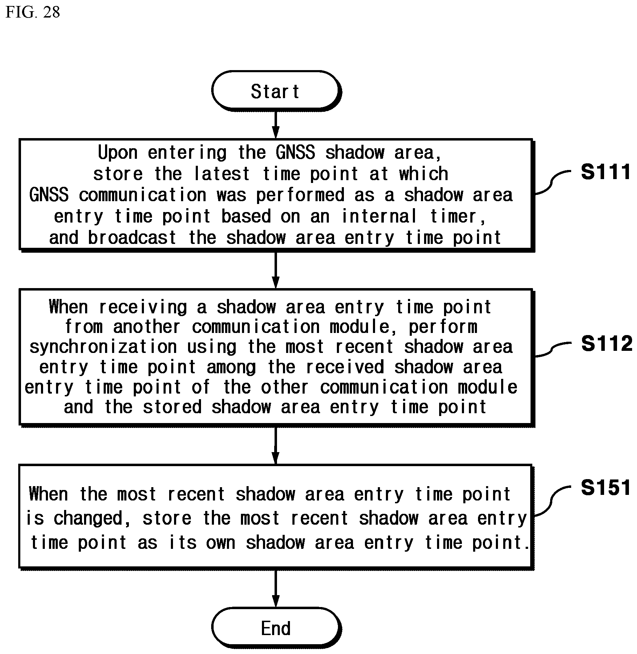

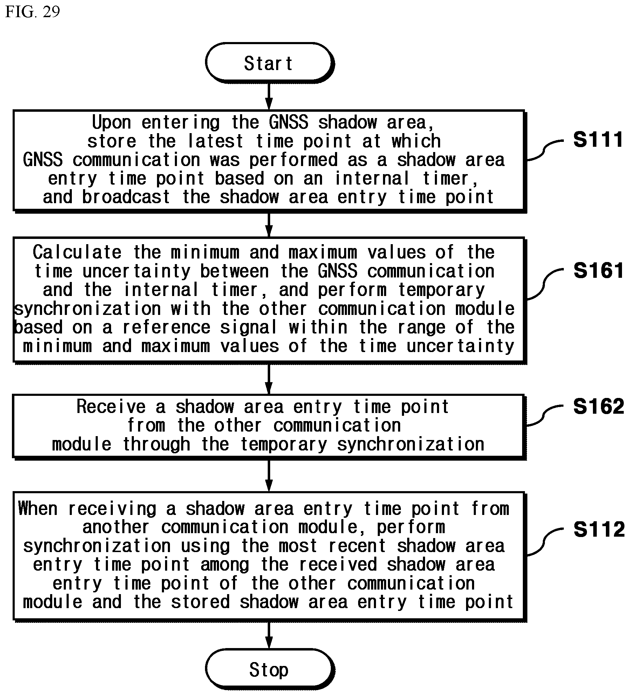

FIG. 24 is a flow chart of a communication method of a communication module according to a second embodiment of the present invention, and FIGS. 25 to 29 are flowcharts of a communication method of a communication module according to a second embodiment of the present invention. The detailed description of each step in FIGS. 24 to 29 corresponds to the detailed description of the communication module in FIGS. 15 to 23, and any redundant description will be omitted hereinafter.

In order for a communication module within a GNSS shadow area to perform V2X communication, upon entering the GNSS shadow area, the latest time point at which GNSS communication was performed is stored as a shadow area entry time point based on an internal timer in step **S111,** and the shadow area entry time point is broadcast. Here, the stored shadow area entry time point can be broadcast periodically.

Thereafter, when receiving a shadow area entry time point from another communication module, synchronization is performed at step **S112** using the most recent shadow area entry time point among the received shadow area entry time point of the other communication module and the stored shadow area entry time point. Synchronization between communication modules is performed using the most recent reliable shadow area entry time point.

Here, in step **S121,** the communication module having the most recent shadow area entry time point can be set as a synchronization reference communication module.

In addition, in step **S131,** a first group is formed with the communication modules that performed the synchronization, and communication can be performed with other communication modules within the first group.

During synchronization and communication as a group, if a shadow area entry time point is received from another communication module that does not belong to the first group, synchronization can be performed at step **S141** using the most recent shadow area entry time point among the received shadow area entry time point of the other communication module that does not belong to the first group and the shadow area entry time point of the first group.

In addition, if the most recent shadow area entry time point is changed, in step **S151,** the most recent shadow area entry time point can be stored as its own shadow area entry time point.

Before receiving the shadow area entry time point from the other communication module in step **S112,** temporary synchronization and data reception can be performed through steps **S161** and **S162.** In step **S161,** the minimum and maximum values of the time uncertainty between the GNSS communication and the internal timer are calculated, and temporary synchronization with the other communication module is performed based on a reference signal within the range of the minimum and maximum values of the time uncertainty, and in step **S162,** the shadow area entry time point can be received from the other communication module through the temporary synchronization.

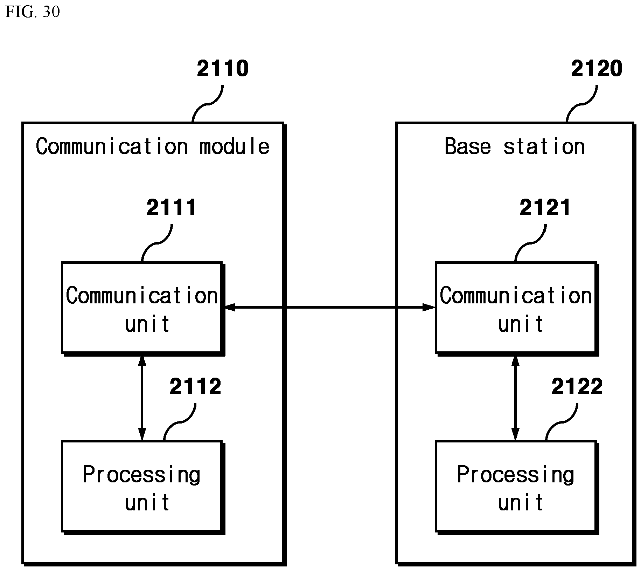

FIG. 30 is a block diagram of a communication module and a base station according to a third embodiment of the present invention.

The communication module **2110** and the base station **2120** according to a third embodiment of the present invention transmit and receive data through V2X communication in order to implement autonomous driving and intelligent transportation systems. The communication module **2110** according to a third embodiment of the present invention includes a communication unit **2111** and a processing unit **2112,** and the base station **2120** according to a third embodiment of the present invention includes a communication unit **2121** and a processing unit **2122.**

The communication module **2110** may be a communication module that performs V2X communication mounted on a mobile device such as a vehicle. The base station **2120** may be a base station that performs V2X communication for autonomous driving with the communication module **2110** of the vehicle. Here, the base station **2120** may include at least one of a roadside base station (RSU, Road Side Unit) and a mobile communication base station (eNB). When communicating with a roadside base station, it may be V2I communication, and when communicating with a mobile communication base station, it may be V2N communication.

The communication module **2110** is mounted on a vehicle, and when the vehicle enters a driving negotiation area, it must perform driving negotiation with another communication module for autonomous driving. At this time, in order to participate in the driving negotiation area, that is, in a lane, the base station **2120** may be a roadside base station located around the lane.

The communication module **2110** performs driving negotiation using a driving negotiation message when entering a driving negotiation required area. To this end, the communication unit **2111** transmits and receives a driving negotiation message with a base station **2120** or another communication module **2131** when entering a driving negotiation required area.

In order to achieve autonomous driving at level 4 or higher, vehicle-to-vehicle driving negotiation is necessary, beyond just relying on the vehicle's own camera, LIDAR, or radar to perform autonomous driving. At this time, driving negotiation can be achieved in autonomous driving by utilizing V2X communication that enables communication with surrounding vehicles and infrastructure.

In particular, vehicle-to-vehicle driving negotiation is essential in areas where vehicles may come into contact. Here, areas where driving negotiation is necessary may be areas where vehicles on different roads meet, such as merging areas or intersections where roads intersect. In these areas, since lanes overlap, there is a risk of accidents, and driving cooperation is necessary on how to drive between vehicles to prevent accidents. In other words, in order to realize autonomous driving at level 4 or higher, autonomous vehicles must communicate with other vehicles at intersections and merging roads to exchange driving priorities and intentions to yield.

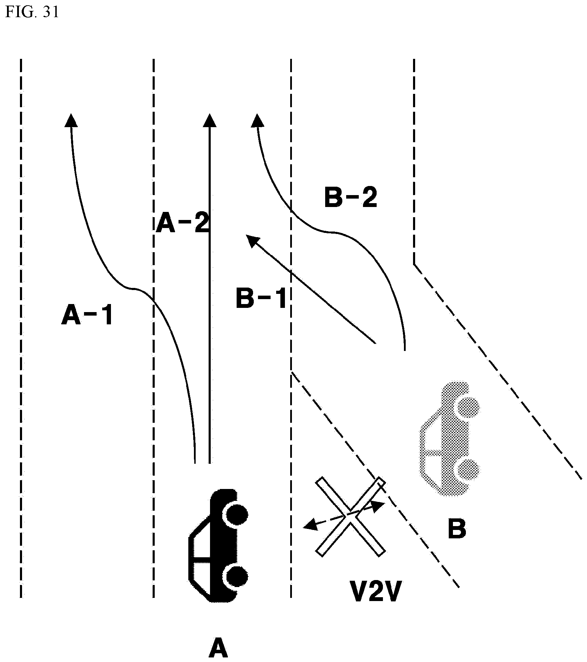

For example, as in FIG. 31, when vehicle B enters a merging road where vehicle A is driving, vehicle B can drive on route B-1 or route B-2 at the merging point. The decision on the driving route may vary depending on the speed or driving route of vehicle A. If the driving routes of vehicles A and vehicles B overlap, this may cause an accident. To prevent an accident, driving negotiation may be performed between vehicles A and B through V2V communication before vehicle B merges. At this time, vehicle A may decide whether to change its driving route to A-1 or continue driving on A-2. Vehicle B may decide whether to merge directly onto B-1 when vehicle A changes its driving route to A-1, or to continue driving on route B-2 instead of B-1 if vehicle A continues driving on A-2, and change its driving route after vehicle A passes. For vehicle-to-vehicle driving negotiation between Vehicle A and Vehicle B, a broadcast-based communication method in LTE-V2X can be used, but it is not easy to implement with only broadcast communication. In addition, considering that the communication frequency band of V2X is mainly 5.9 GHz, there may be environmental conditions where direct communication between vehicles is difficult. The communication frequency band used in V2X is 5.9 GHz, and since it uses a higher frequency band, the frequency linearity is stronger than cellular communication such as LTE, which is disadvantageous for communication in a non-line-of-sight (NLOS) environment. In addition, since the transmission power of each vehicle is limited, direct V2V communication between vehicles may not be smooth in environments such as expressways.

For example, in an environment where communication is difficult due to differences in altitude between vehicles A and B on an elevated highway, or obstacles such as noise barriers exist between vehicles A and B, V2V communication between vehicles may have communication quality issues due to obstacles and altitude issues.

For driving cooperation in such areas requiring driving cooperation, the communication unit **2111** can perform driving negotiation through the base station 2120. In the case of V2I (vehicle to infrastructure) communication utilizing a base station that can secure LOS by adjusting the relatively high elevation and antenna angle rather than V2V communication between vehicles, especially a roadside base station (RSU), communication can be maintained with high reliability. In other words, when a roadside base station is utilized for driving negotiation, an environment favorable for communication in areas where communication is difficult, such as NLOS, can be secured, and traffic flow can be controlled by alleviating traffic volume through linkage with a Cooperative Intelligent Transport Systems (C-ITS), and the roadside base station can mediate priority in driving negotiation.

The processing unit **2112** determines a driving scenario within the driving negotiation required area by using a driving negotiation message received from the base station **2120** when the base station **2120** is located in the driving negotiation required area. When the processing unit **2112** does not receive data for autonomous driving from the base station **2120** or another communication module **2131** or another infrastructure, the processing unit **2112** determines a driving scenario for autonomous driving by using data on the external environment being detected by a camera, LIDAR or radar mounted on the vehicle, however, when data for autonomous driving or a driving negotiation message for driving negotiation or a driving assistance message is received from the outside, the driving scenario can be determined by taking these into consideration together. Here, the driving scenario determines how to proceed with driving in the future, and may be a scenario for safe driving including driving speed, driving direction, driving lane, priority, whether to yield, and the like.

The driving negotiation message received from the base station **2120** may include whether another communication module **2131** is located within the driving negotiation required area, and driving information of the other communication module when another communication module **2131** is located within the driving negotiation required area. The driving negotiation message may include various information within the driving negotiation required area, and in particular, it may include driving information of the other communication module **2131** that may cause an accident. It may include not only other communication modules **2131** but also various driving information related to driving within the driving negotiation required area, such as a vehicle not equipped with a V2X communication module or a pedestrian.

The communication unit **2111** can receive not only a driving negotiation message but also a driving assistance message from the base station **2120.** Here, the driving assistance message may include driving information determined by the base station **2120.** For example, the driving assistance message may include at least one of an entry order, a driving route, a driving speed, and an expected location of another vehicle at the driving time point. The base station **2120** can not only play a role of transmitting driving information, but also determine which communication module has priority so that an accident does not occur between communication modules, and which driving path can prevent an accident when each communication module is driving, and may perform the role of an intermediator that transmits the judgment to the corresponding communication module.

The communication unit **2111** performs V2I communication with the base station **2120** for driving negotiation through the base station **2120** when the base station **2120** is located within the driving negotiation required area, and when the base station **2120** is not located within the driving negotiation required area, the communication unit **2111** can perform driving negotiation directly through V2V communication with another communication module **2131.**

Here, driving negotiation can be performed not only using broadcast communication, but also using unicast communication or groupcast communication.

The communication unit **2111** can search for a base station **2120** through broadcast communication and receive the driving negotiation message through unicast communication. Both broadcast communication and unicast communication can be used depending on the driving negotiation process.

When searching for a base station **2120,** the communication unit **2111** transmits a search message including information on entering a driving negotiation required area, and may receive a response message including unicast link setup information from the base station **2120.** When entering a driving negotiation required area, the base station **2120** that will perform driving negotiation within the driving negotiation required area can be searched (discovered) through broadcast communication. At this time, the search message for searching may include information that driving negotiation is required. Information that the current own vehicle requires driving negotiation, such as merging, may be included in a part of the search message.

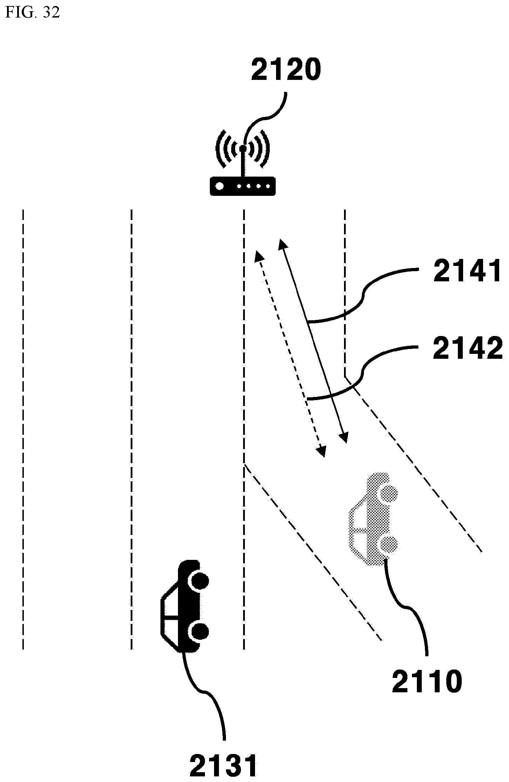

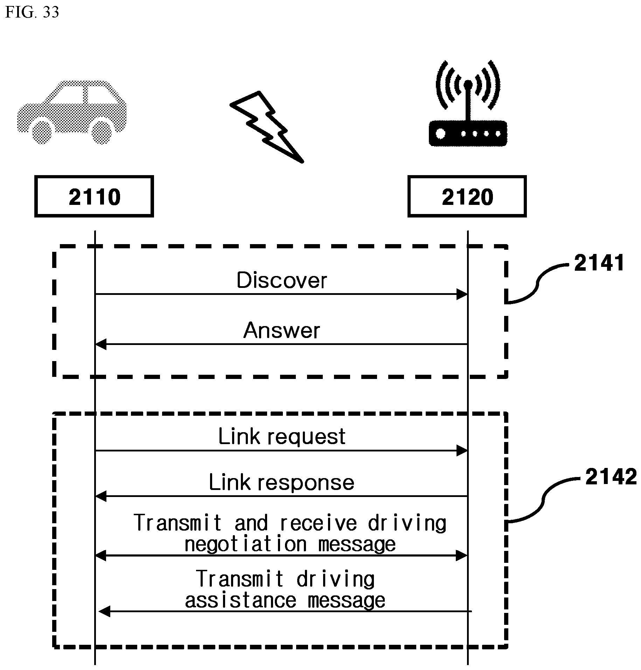

The base station **2120** receives a search message from the communication module **2110** through the communication unit **2121,** and if a driving negotiation is required according to information included in the search message, transmits a response (answer) message in response to the search message. At this time, the response message may transmit information required for unicast link establishment, that is, information on radio resources. Here, the unicast link establishment information may include at least one among a location of a sub-channel, the number of sub-channels, transmission (Tx) power, and a validity time for radio resources. A sub-channel is a channel distinguished by time and frequency, and may include the location and number of sub-channels available for driving negotiation, transmission power, and a validity time for radio resources. When receiving a response message from the base station **2120,** the processing unit **2112** may connect a unicast link using a sub-channel with the lowest reception signal strength among the sub-channels included in the response message. A unicast link can be connected by selecting a sub-channel with a low RSSI (received signal strength) through a sensing-based method among the bandwidths designated for driving negotiation, and driving negotiation can be performed through unicast communication with a base station **2120.** As shown in FIGS. 32 and 33, broadcast communication **2141** can be used when searching for a base station **2120,** while unicast communication **2142** can be used when transmitting and receiving a driving negotiation message.

When the base station **2120** receives a search message including information requiring driving negotiation from the communication module **2110,** it transmits a response message and generate a driving negotiation message or a driving assistance message and may transmit it to the communication module **2110.** When generating the driving negotiation message or the driving assistance message, the base station **2120** may use driving information of another communication module within the driving negotiation required area.

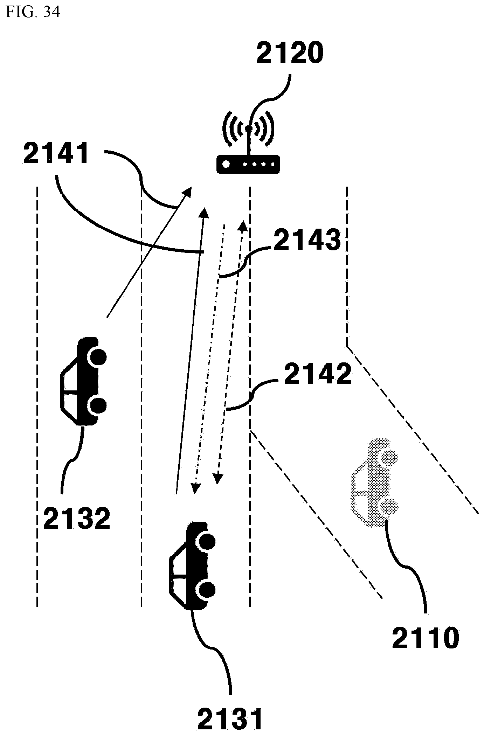

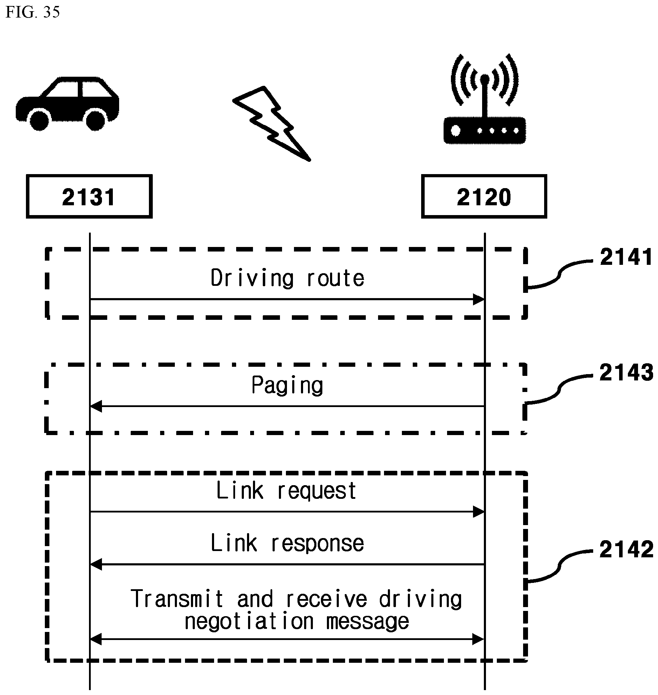

The base station **2120** can receive a driving information message including a driving route and a driving speed from another communication module **2131** within the driving negotiation required area through broadcast communication, perform paging with another communication module within the driving negotiation required area through groupcast communication, and transmit the driving assistance message to another communication module within the driving negotiation required area through unicast communication. The base station **2120** may receive a report of a driving information message from another communication module **2131** within the driving negotiation required area. As shown in FIGS. 34 and 35, when another communication module **2131** and **2132** enters the driving negotiation required area, it transmits its own driving information message to the base station **2120** through broadcast communication **2141.** When a driving negotiation is required, the base station **2120** performs paging for other communication modules **2131** and **2132** that need to perform the driving negotiation by using groupcast communication **2143.** Here, the groupcast communication is a V2X communication method that performs communication only for the communication modules **2110** that are set as a group, and can efficiently transmit data to all communication modules **2110** that are grouped by groupcast. Paging is a method of transmitting a call signal to identify the location of the corresponding communication module in order to perform communication, and by performing paging by using groupcast communication **2143** instead of broadcast communication **2141,** paging can be efficiently performed only for the communication modules that need the driving negotiation. Through paging, information that a driving negotiation message needs to be transmitted and received for the driving negotiation and information about wireless resources for setting up a unicast link can be transmitted. Here, the information about wireless resources may include the location of the sub-channel, the number of sub-channels, transmission power, and the validity time for the wireless resource. Afterwards, when the unicast link is established, a driving negotiation message can be transmitted and received with another communication module **2131** through unicast communication **2142.**

The base station **2120** can generate a driving assistance message using driving information of other communication modules **2131** within the driving negotiation required area, and the communication unit **2111** may receive a driving assistance message according to another communication module within the driving negotiation required area from the base station through unicast communication. Here, the driving assistance message may be a driving scenario for each communication module determined by the base station **2120** using driving information of the communication modules within the driving negotiation required area received by the base station **2120,** and may be a merging assistance (assist) message according to the intermediator role of the base station **2120.** Here, the driving assistance message may include a recommended moving route, a moving speed, an expected location of a surrounding vehicle at the driving time point, and the like. The processing unit **2112** may determine a driving scenario in the driving negotiation required area using information acquired from sensors mounted on its own vehicle, a high-precision map, and a driving negotiation message and a driving assistance message received from the base station **2120** through C-V2X. At this time, a weight may be placed on the driving assistance message received from the base station **2120,** and a driving scenario may be determined based on this. The base station **2120** may also transmit and receive a driving negotiation message to another communication module **2131** to enable autonomous driving according to driving negotiation between communication modules.

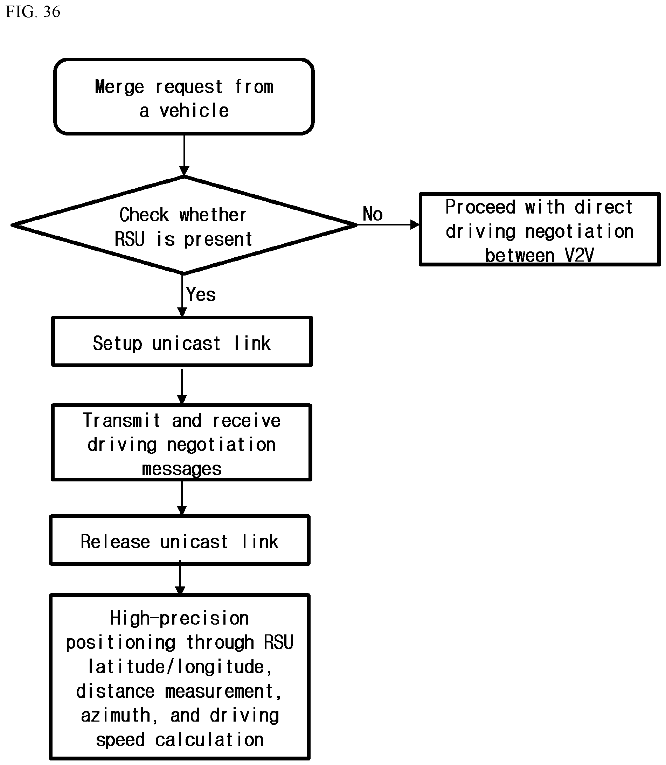

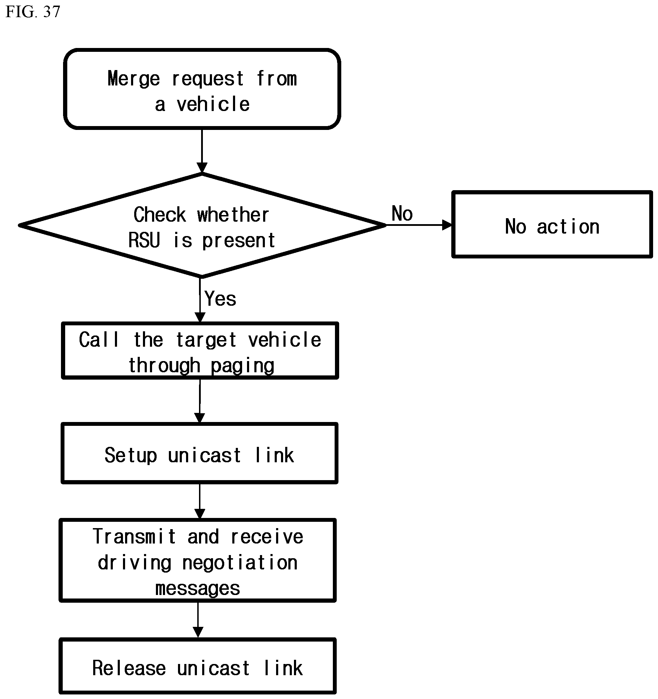

The communication module **2110** is a communication module mounted on a vehicle, and the area requiring driving negotiation may be a merging area where multiple roads merge. The base station **2120** receives a report on the expected driving route of other communication modules **2131** and **2132** entering the main road, and when a request to merge occurs from the communication module **2110** merging into the driving road, driving negotiation may be performed through the processes of FIGS. 36 and 37. The communication module **2110** wishing to merge first checks whether the base station **2120** exists in the merging area, which is the area requiring driving negotiation, through broadcast communication, as shown in FIG. 36, and if the base station **2120** does not exist, driving negotiation may be performed through direct V2V communication. If the base station **2120** exists, a unicast link may be set up, and a driving negotiation message may be transmitted to and received from the base station **2120** through unicast communication. After receiving the above driving negotiation message, the unicast link connection can be released. When the message exchange is completed, the unicast link connection can be released in order to reuse the frequency of the corresponding sub-channel. Thereafter, the communication module **2110** can use the data included in the driving negotiation message or driving assistance message received from the base station **2120** and the high-precision positioning through latitude/longitude, distance measurement, azimuth, and driving speed calculations included in sensor measurement data to determine a driving scenario and perform cooperative driving accordingly.

When the base station **2120** receives a merging request through a search message from the communication module **2110,** it determines whether driving control is required for other communication modules **2131** and **2132** driving on the driving road, and if there is no risk of an accident with other communication modules **2131** and **2132** and driving control is not required, it does not perform any operation for other communication modules **2131** and **2132.** When driving control is required for other communication modules **2131** and **2132,** the communication module of the target vehicle can be called through paging, a unicast link can be established, and a driving negotiation message can be transmitted and received through unicast communication so that other communication modules **2131** and **2132** can drive according to the driving negotiation. After receiving the driving negotiation message, the unicast link connection can be released.

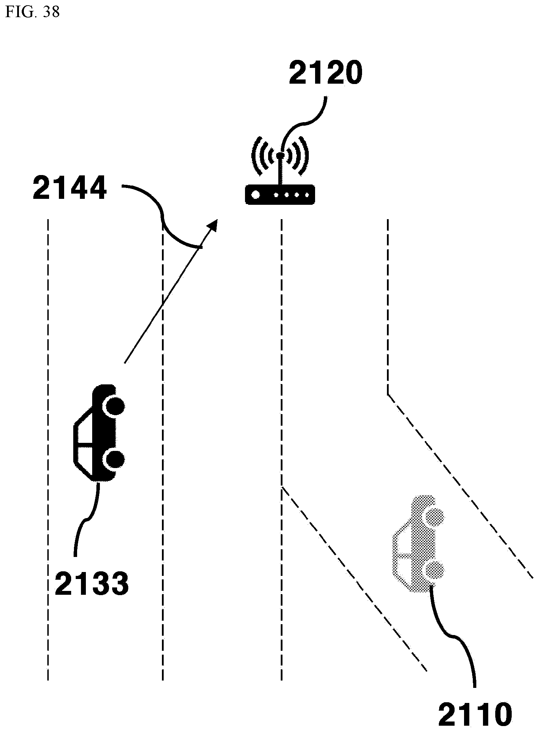

When a vehicle not equipped with a communication module is located within the driving negotiation required area, the base station **2120** can detect driving information of the vehicle not equipped with the communication module and generate the driving negotiation message or the driving assistance message using the detected driving information. As shown in FIG. 38, when a vehicle **2133** not equipped with a V2X communication module is located, the base station **2120** can estimate the moving speed of the driving vehicle **2133** by utilizing sensors such as a camera, LIDAR, and radar, determine a driving scenario, and transmit the driving assistance message to the communication module **2110** that wants to merge into the merging lane. Here, a vehicle equipped with a V2X communication module but without a driving negotiation function can also perform driving negotiation via the base station **2120,** as shown in FIG. 38.

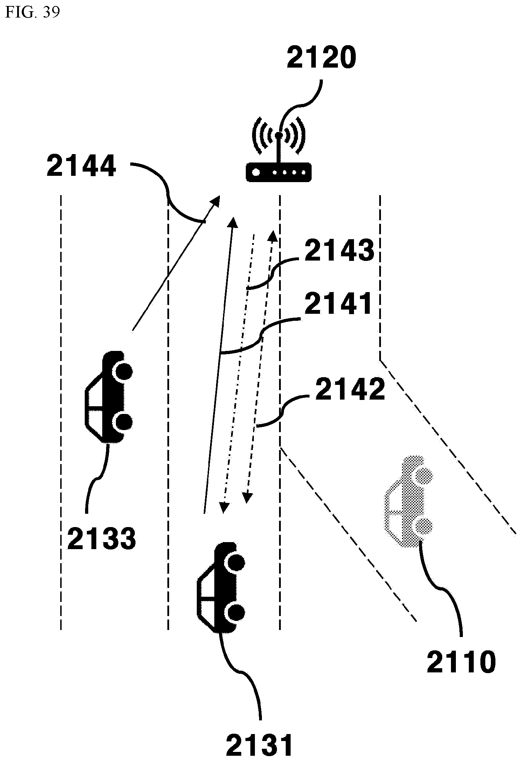

As shown in FIG. 39, when a vehicle **2131** equipped with a V2X communication module and a vehicle **2133** not equipped with a V2X communication module are located in a driving lane, the base station **2120** can predict the driving path of the vehicle **2133,** exchange a driving negotiation message with the vehicle **2131,** and then transmit a driving assistance message to the communication module **2110.**

As described above, for a communication module **2110** merging into a merging road, a base station **2120** can mediate a driving negotiation with another communication module driving on the driving road so that the driving negotiation can take place. Through this, in autonomous driving utilizing V2X, geographical limitations of communication during driving negotiation can be overcome through the base station, and smooth traffic control is possible through linkage with the Intelligent Transport Systems (C-ITS), and the base station can act as a mediator during driving negotiation. Furthermore, in the case of conventional LTE-V2X-based communication, only broadcast is possible, so it is impossible to know whether a communication packet has been received, but during driving negotiation, unicast or groupcast can be utilized to confirm the intention of the receiving vehicle, and by utilizing unicast and groupcast rather than simple broadcast, the efficiency of communication can be increased and interference can be minimized.

The area where driving negotiation is required may include a case where overtaking takes place, and at this time, the communication unit **2111** may transmit an overtake message to the other communication module through broadcast communication when approaching the other communication module, and may transmit and receive a driving negotiation message with the other communication module through unicast communication. The area where driving negotiation is required may include a case where overtaking takes place, and at this time, the communication unit **2111** may transmit an overtake message to the other communication module through broadcast communication when approaching the other communication module, and may transmit and receive a driving negotiation message with the other communication module through unicast communication.

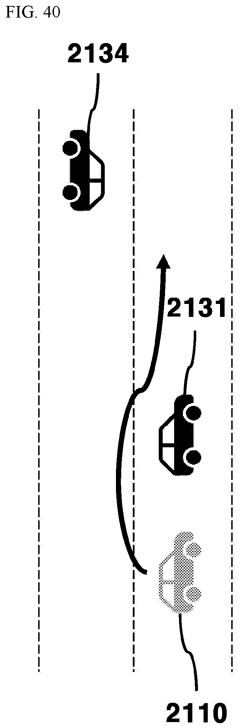

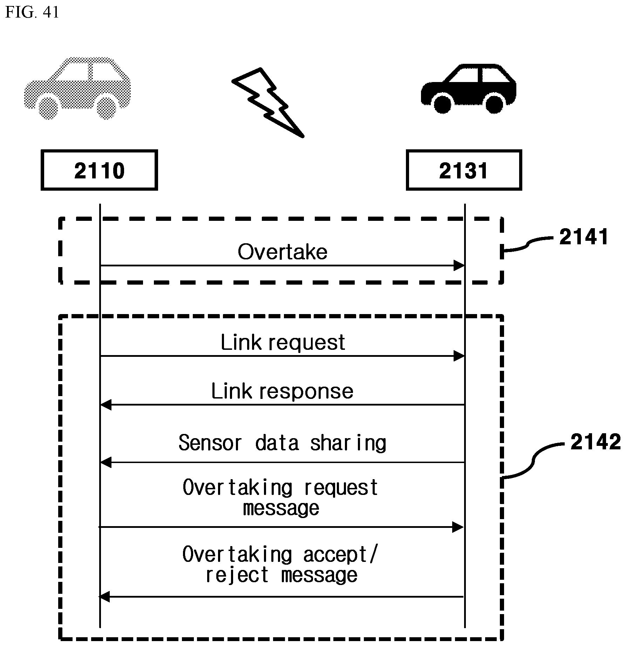

As shown in FIG. 40 and FIG. 41, when a vehicle equipped with a communication module **2110** approaches a vehicle equipped with another communication module **2131,** an overtake message including information that the vehicle has approached from behind can be transmitted through broadcast communication **2141.** At this time, information for establishing a unicast link can be transmitted, and a sub-channel with a low RSSI received through a sensing-based method among the bandwidths designated by driving negotiation can be selected to establish a unicast link.

In the case of LTE-V2X, blind retransmission can be used to retransmit regardless of whether the other vehicle successfully receives the message. However, in a scenario such as overtaking in a two-lane environment as shown in FIG. 40, since the intention of the other vehicle **2131** is very important, a unicast communication method that can apply Hybrid Automatic Repeat Request (HARQ) can be used instead of using the broadcast communication method in LTE-V2X.

The communication unit **2111** transmits an overtaking request message to the other communication module and receives an overtaking consent message or an overtaking rejection message from the other communication module, wherein the overtaking consent message may include front camera information of the other communication module.

The overtaking request message may include information such as the driving speed of a vehicle equipped with a communication module **2110,** the driving speed during acceleration for overtaking, and whether to request vehicle A to decelerate. A vehicle equipped with another communication module **2131** may, after receiving the overtaking request message, send back an overtaking consent (accept) or rejection (reject) message, and at this time, may transmit the capability of the vehicle's sensor to transmit whether information such as front camera information can be transmitted. Through this, the communication module **2110** can receive sensor data of a preceding vehicle in a two-lane two-way road environment where it is difficult to secure a forward view, and stably receive sensor data on the forward view secured by the preceding vehicle through unicast communication.

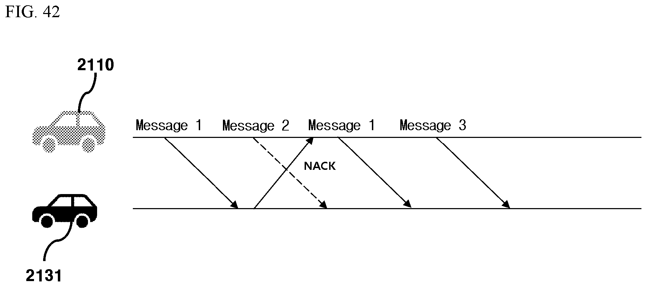

The communication unit **2111** transmits a second driving negotiation message after transmitting a first driving negotiation message to another communication module **2131,** and may retransmit the first driving negotiation message when receiving a NACK signal for the first driving negotiation message. FIG. 42 shows an example of transmitting and receiving messages through the HARQ method when performing driving negotiation with unicast communication. In order to increase transmission efficiency with the HARQ method, transmission efficiency may be increased by using at least two channels instead of a single channel. For example, in the case where a large amount of transmission data such as sensor data is required, utilizing multiple channels is more advantageous in terms of transmission efficiency than utilizing a single channel. That is, the communication module **2110** transmits message 1 through channel A, and sends message 2 through channel B without waiting for an ACK/NACK from another communication module **2131,** but when receiving a NACK signal for message 1, message 1 may be retransmitted through an available channel in the next transmission turn.

The communication module **2110** according to a third embodiment of the present invention can use groupcast as well as broadcast and unicast when performing driving negotiation. The communication module **2110** according to a third embodiment of the present invention includes a communication unit **2111** that transmits and receives a driving negotiation message to and from a base station **2120** when entering a driving negotiation required area, and a processing unit **2112** that determines a driving scenario within the driving negotiation required area using the driving negotiation message received from the base station **2120,** and can receive information about the driving negotiation required area from the base station using broadcast communication, and can receive a driving negotiation message or a driving assistance message through groupcast communication for a communication module located within the driving negotiation required area. In the case when a message for driving negotiation must be transmitted and received to and from a communication module corresponding to a specific condition, groupcast communication can be used to efficiently transmit and receive the message.

Here, the driving negotiation required area may be an intersection or a roundabout. As in the case of a roundabout, the communication module **2110** rotating within the roundabout may be groupcasted, and a driving assistance message for driving negotiation may be transmitted through groupcast communication. At this time, the driving assistance message may include at least one of the entry time points to the roundabout and the driving priority.

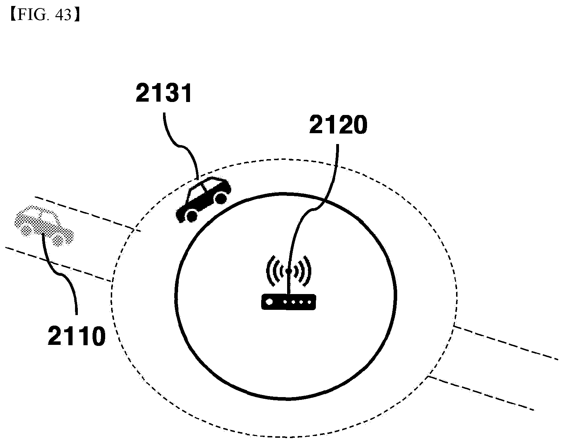

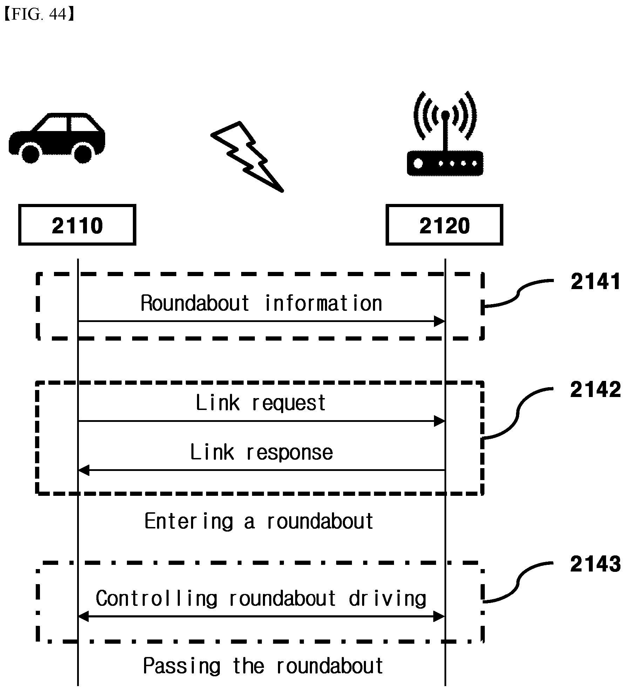

As shown in FIG. 43, in a roundabout, the groupcast method can be used to determine the entry time and driving priority of the roundabout. The base station **2120** in the roundabout can basically form a groupcast with vehicles that wish to enter the roundabout. As shown in FIG. 44, the communication module **2110** can receive roundabout information from a roadside base station through broadcast communication **2141** before entering the roundabout. The received roundabout information may include information for unicast link setup. The communication module **2110** can receive information for groupcast of the roundabout from the base station **2120** through unicast communication **2142,** and then receive information such as the entry time and driving priority of the roundabout through groupcast communication **2143** to perform driving negotiation.

In the case where the driving negotiation required area is an intersection, a group cast is set according to the type of driving lane within the driving negotiation required area, and the communication unit **2111** can receive a driving negotiation message through group cast communication corresponding to the group cast to which the communication module **2110** belongs. Unlike a roundabout where a group cast is set according to whether or not it is within the rotating section of the roundabout, a group cast can be set for vehicles with a high driving correlation in a general intersection. At this time, as shown in FIG. 43, a group cast can be set according to the type of driving lane. For example, driving negotiation can be performed by dividing the group cast into a left turn lane **2144** and a right turn lane **2145.** Since each group cast has different signal information and pedestrian information, autonomous driving can be performed by judging signal information and the presence or absence of a pedestrian, and the like. The base station **2120** transmits groupcast information currently being used at the intersection through constant broadcast communication **2141,** and the communication modules receive driving negotiation messages through groupcast communication **2143** corresponding to their own driving lanes. Each communication module uses a method in that only the groupcast message corresponding to itself is received and the remaining groupcast messages are discarded. Through this, the time used for message decoding can be reduced, and if directionality is added to the Tx transmission direction of the base station, frequency interference between groupcast communications can also be minimized.

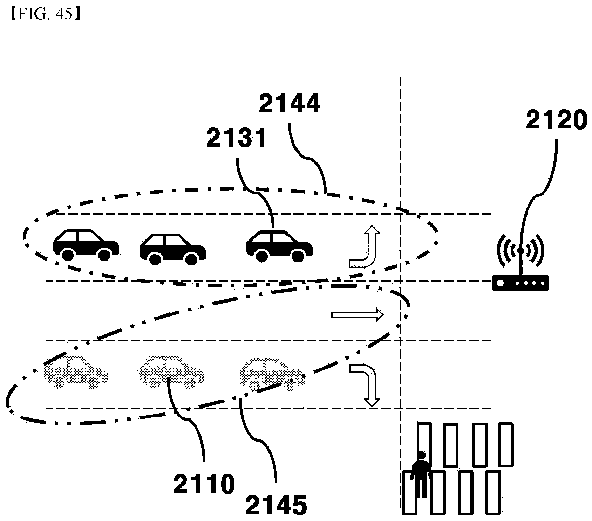

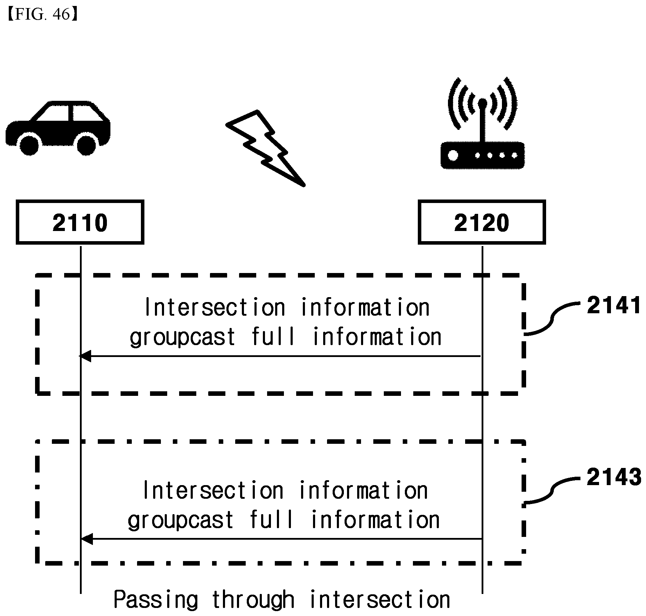

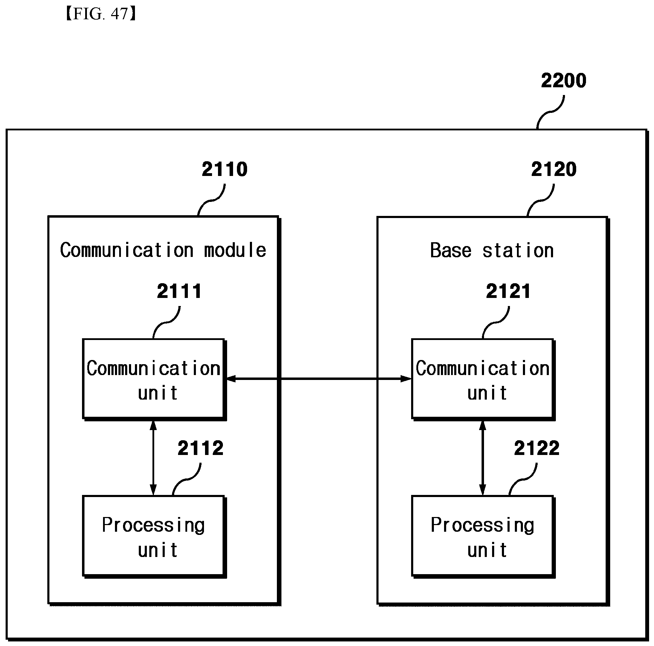

FIG. 47 is a block diagram of an autonomous driving and intelligent transportation system according to a third embodiment of the present invention. A detailed description of each component of FIG. 47 corresponds to the detailed description of the communication module and base station of FIGS. 30 to 46, and thus, any redundant description will be omitted.

The autonomous driving and intelligent transportation system **2200** according to a third embodiment of the present invention includes: a base station **2120** which is located in a driving negotiation required area, receives a search message or a driving information message from a communication module within the driving negotiation required area, and transmits a driving negotiation message to the communication module requiring driving negotiation when a driving negotiation is required between communication modules within the driving negotiation required area; and a communication module **2110** which determines a driving scenario within the driving negotiation required area by using the driving negotiation message being received from the base station when entering the driving negotiation required area. Here, the base station **2120** and the communication module **2110** can transmit and receive the search message or the driving information message by broadcast communication, and can transmit and receive the driving negotiation message by unicast communication.

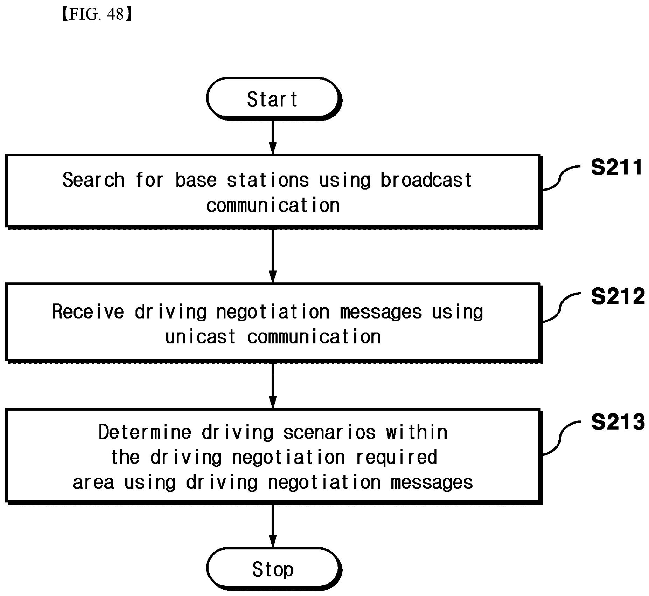

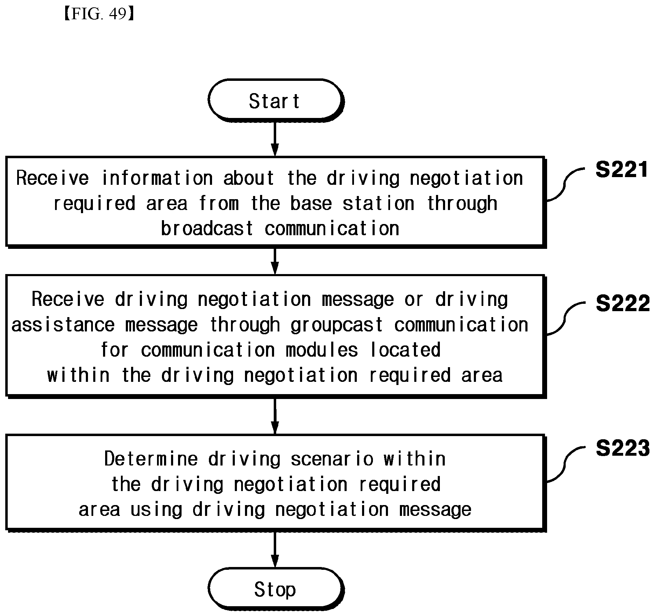

FIG. 48 is a flow chart of a V2X driving negotiation method according to a third embodiment of the present invention, and FIG. 49 is a flow chart of a V2X driving negotiation method according to a third embodiment of the present invention. Detailed descriptions of each step of FIGS. 48 and 49 correspond to detailed descriptions of the communication module and base station of FIGS. 30 to 47, and thus, any redundant descriptions will be omitted below.

In order to perform V2X driving negotiation, the communication module first searches for a base station through broadcast communication in step **S211,** and a driving negotiation message is received through unicast communication in step **S212.** Then in step **S213,** the driving negotiation message is used to determine a driving scenario within the driving negotiation required area. That is, driving negotiation can be performed through the base station, but broadcast communication and unicast communication can be used to increase communication efficiency.

In addition, in order to perform V2X driving negotiation, the communication module receives information on a driving negotiation required area from a base station through broadcast communication in step **S221,** receives a driving negotiation message or a driving assistance message through groupcast communication for a communication module located within the driving negotiation required area in step **S222,** and then determines a driving scenario within the driving negotiation required area using the driving negotiation message in step **S213.** That is, driving negotiation can be performed through the base station, but communication efficiency can be improved by using broadcast communication, unicast communication, and groupcast communication.

Through this, geographical limitations of communication during driving negotiation in autonomous driving utilizing V2X can be overcome through the base station, smooth traffic control is possible through linkage with the Intelligent Transport System (C-ITS), and the base station can act as a mediator during driving negotiation. Furthermore, in the case of conventional LTE-V2X-based communication, only broadcast was possible, making it impossible to know whether a communication packet was received, but during driving negotiation, unicast or groupcast can be utilized to confirm the intention of the receiving vehicle, and by utilizing unicast and groupcast rather than simple broadcast, the efficiency of communication can be increased and interference can be minimized.

Meanwhile, the embodiments of the present invention can be implemented as computer readable codes on a computer readable recording medium. The computer readable recording medium includes all types of recording devices in which data readable by a computer system is stored.

As for examples of computer readable recording media, there are ROM, RAM, CD-ROM, magnetic tape, floppy disk, and optical data storage device; in addition, the computer readable recording medium is distributed over networked computer systems; and computer readable code can be stored and executed in a distributed manner. In addition, functional programs, codes, and code segments for implementing the present invention can be easily inferred by programmers in the technical field to which the present invention belongs.

Those skilled in the art related to the present embodiment will be able to understand that it may be implemented in a modified form within a range that does not deviate from the essential characteristics of the above description. Therefore, the disclosed methods are to be considered in an illustrative rather than a limiting sense. The scope of the present invention is shown in the claims rather than the foregoing description, and all differences within the equivalent scope shall be construed as being included in the present invention.

## Claims

1. A communication module comprising:
a communication unit configured to receive communication channel configuration information for performing V2X communication from a base station; and
a processor configured to allocate a bandwidth for each function for performing V2X communication according to the communication channel configuration information and generates communication data,
wherein the communication channel configuration information varies according to an area in which the communication module is located.

2. The communication module according to claim 1,
wherein the communication channel configuration information is set according to regional information within a coverage area of the base station, and varies according to changes in circumstances within the coverage area of the base station.

3. The communication module according to claim 1,
wherein the communication channel configuration information varies in bandwidth for an autonomous driving function depending on at least one of pedestrian information, traffic information, and vehicle density within a coverage area of the base station.

4. The communication module according to claim 1,
wherein the communication channel configuration information is transmitted periodically from the base station.

5. The communication module according to claim 1,
wherein the communication channel configuration information is transmitted in a first period, and when the communication channel configuration information is changed, a transmission period of the communication channel configuration information is transmitted in a second period which is faster than the first period for a predetermined time.

6. A base station comprising:
a processor configured to set communication channel configuration information for performing V2X communication using regional information within a coverage area; and
a communication unit configured to transmit the communication channel configuration information to the coverage area.

7. The base station according to claim 6,
wherein the processor changes the communication channel configuration information according to changes in circumstances within the coverage area.

8. The vehicle terminal according to claim 6,
wherein the processor sets the communication channel configuration information to allocate a bandwidth for an autonomous driving function according to at least one of pedestrian information, traffic information, and vehicle density within the coverage area.

9. The base station according to claim 6,
wherein the communication unit receives module information from one or more communication modules located within the coverage area, and
wherein the processor sets the communication channel configuration information using the module information received.

10. The base station according to claim 6,
wherein the communication unit transmits the communication channel configuration information in a first period.
